(19) Europäisches Patentamt / European Patent Office / Office européen des brevets

(11) **EP 3 016 392 A1**

(12) **EUROPEAN PATENT APPLICATION**
published in accordance with Art. 153(4) EPC

(43) Date of publication:
**04.05.2016 Bulletin 2016/18**

(51) Int Cl.:
**H04N 19/51** (2014.01)    **H04N 19/105** (2014.01)

(21) Application number: **14829473.9**

(22) Date of filing: **24.07.2014**

(86) International application number:
**PCT/KR2014/006770**

(87) International publication number:
**WO 2015/012622 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.07.2013 US 201361857780 P**

(71) Applicant: **Samsung Electronics Co., Ltd.**
**Gyeonggi-do 16677 (KR)**

(72) Inventors:
• **PARK, Min-woo**
  **Hwaseong-si**
  **Gyeonggi-do 445-762 (KR)**
• **LEE, Jin-young**
  **Hwaseong-si**
  **Gyeonggi-do 445-828 (KR)**
• **WEY, Ho-cheon**
  **Seongnam-si**
  **Gyeonggi-do 463-705 (KR)**

(74) Representative: **Appleyard Lees IP LLP**
**15 Clare Road**
**Halifax HX1 2HY (GB)**

(54) **METHOD FOR DETERMINING MOTION VECTOR AND APPARATUS THEREFOR**

(57)    A video decoding method includes determining, from among a first sample and a second sample with different color components, at least one second sample that is used to correct a value of the first sample; determining a filter parameter set based on a band including the value of the first sample, wherein the band is from among a plurality of bands determined by dividing a total range of sample values into predetermined intervals; and filtering a value of the at least one second sample by using the determined filter parameter set and correcting the value of the first sample by using a value obtained by the filtering, wherein the first sample is any one of a luma sample and a chroma sample, and the second sample is any one of the luma sample and the chroma sample that is not the first sample.

FIG. 1A

MOTION VECTOR DETERMINING APPARATUS (10)

PREDICTION CANDIDATE DETERMINER (11) → MOTION VECTOR DETERMINER (12)

EP 3 016 392 A1

**Description**

TECHNICAL FIELD

The disclosure relates to a method and apparatus for determining a motion vector while performing video encoding and decoding.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

A video codec reduces an amount of data by using a prediction method based on a high temporal and spatial relationship between images of a video. According to the prediction method, image information is recorded by using a temporal or spatial distance between images, prediction errors, etc. so as to predict a current image by using peripheral images.

DETAILED DESCRIPTION OF THE INVENTION

TECHNICAL PROBLEM

Provided is a method of determining a motion vector used while performing video encoding and decoding using the motion vector.

TECHNICAL SOLUTION

Provided are a method and apparatus for determining a motion vector while performing video encoding and decoding.

ADVANTAGEOUS EFFECTS OF THE INVENTION

An effective method and apparatus for determining a motion vector while performing inter prediction or inter-layer prediction with respect to performing video encoding and decoding are provided.

DESCRIPTION OF THE DRAWINGS

FIG. 1A is a block diagram of a motion vector determining apparatus according to an embodiment.
FIG. 1B is a flowchart of a motion vector determining method according to an embodiment.
FIG. 2A is a block diagram of a video encoder involving a motion vector determining method, according to an embodiment.
FIG. 2B is a block diagram of a video decoder involving a motion vector determining method, according to an embodiment.
FIG. 3 illustrates an inter-layer prediction structure according to various embodiments.
FIGS. 4A and 4B illustrate a motion vector determining method according to various embodiments.
FIGS. 5A through 5F illustrate a method of splitting a prediction unit, according to various embodiments.
FIGS. 6A through 6C illustrate syntaxes or semantics with respect to a motion vector determining method, according to various embodiments.
FIG. 7A is a diagram for describing a motion vector determining method in relation to an intra prediction region of a reference unit, according to an embodiment.
FIG. 7B is a diagram for describing a method of splitting a reference block, according to an embodiment.
FIG. 8 is a block diagram of a video encoding apparatus based on coding units according to a tree structure, according to an embodiment.
FIG. 9 is a block diagram of a video decoding apparatus based on coding units according to a tree structure, according to an embodiment.
FIG. 10 is a diagram for describing a concept of coding units according to an embodiment.

FIG. 11 is a block diagram of an image encoder based on coding units, according to an embodiment.

FIG. 12 is a block diagram of an image decoder based on coding units, according to an embodiment.

FIG. 13 is a diagram illustrating deeper coding units and partitions, according to an embodiment.

FIG. 14 is a diagram for describing a relationship between a coding unit and transformation units, according to an embodiment.

FIG. 15 is a diagram for describing encoding information of coding units, according to an embodiment.

FIG. 16 is a diagram of deeper coding units, according to an embodiment.

FIGS. 17 through 19 are diagrams for describing a relationship between coding units, prediction units, and transformation units, according to an embodiment.

FIG. 20 is a diagram for describing a relationship between a coding unit, a prediction unit, and a transformation unit, according to encoding mode information of Table 1.

FIG. 21 is a diagram of a physical structure of a disc in which a program is stored, according to an embodiment.

FIG. 22 is a diagram of a disc drive for recording and reading a program by using a disc.

FIG. 23 is a diagram of an overall structure of a content supply system for providing a content distribution service.

FIGS. 24 and 25 are diagrams respectively of an external structure and an internal structure of a mobile phone to which a video encoding method and a video decoding method are applied, according to an embodiment.

FIG. 26 is a diagram of a digital broadcast system to which a communication system is applied, according to an embodiment.

FIG. 27 is a diagram of a network structure of a cloud computing system using a video encoding apparatus and a video decoding apparatus, according to an embodiment.

BEST MODE

Provided are a method and apparatus for determining a motion vector with respect to performing of video encoding and decoding.

According to various embodiments, a motion vector determining method includes: when a size of a prediction unit belonging to a current layer is larger than a pre-set size, splitting the prediction unit into a plurality of sub-units; determining a reference sub-unit belonging to a reference layer used for inter-layer prediction of a current sub-unit that is one of the plurality of sub-units; determining a sub-motion vector prediction candidate for inter prediction of the current sub-unit by using a motion vector for inter prediction of the reference sub-unit; and determining a motion vector for inter prediction of the current sub-unit by using one of prediction candidates comprising the sub-motion vector prediction candidate.

The pre-set size may include 8x8.

The determining of the motion vector may include determining the motion vector for inter prediction of the reference sub-unit as the motion vector for inter prediction of the current sub-unit.

The motion vector determining method may further include, when an encoding method of the reference sub-unit is an intra mode, determining the sub-motion vector prediction candidate by using a disparity vector for inter-layer prediction of the current sub-unit.

The splitting of the prediction unit may include: signaling the pre-set size; and when the size of the prediction unit is larger than the signaled pre-set size, splitting the prediction unit into the plurality of sub-units.

The motion vector determining method may further include receiving a bitstream, wherein the signaling of the pre-set size may include parsing the pre-set size from the bitstream.

The splitting of the prediction unit may include, when a sum of a width and a height of the prediction unit is larger than 12, splitting the prediction unit into the plurality of sub-units.

The motion vector determining method may further include performing motion compensation on the current sub-unit by using the determined motion vector.

According to various embodiments, a motion vector determining apparatus includes: a prediction candidate determiner configured to split a prediction unit belonging to a current layer into a plurality of sub units when a size of the prediction unit is larger than a pre-set size, determine a reference sub-unit belonging to a reference layer used for inter-layer prediction of a current sub-unit that is one of the plurality of sub-units, and determine a sub-motion vector prediction candidate for inter prediction of the current sub-unit by using a motion vector for inter prediction of the reference sub-unit; and a motion vector determiner configured to determine a motion vector for inter prediction of the current sub-unit by using one of prediction candidates including the sub-motion vector prediction candidate.

According to various embodiments, a non-transitory computer-readable recording medium has recorded thereon a program, which when executed by a computer, performs the motion vector determining method.

MODE OF THE INVENTION

According to various embodiments described in the present specification, the term 'image' may indicate a still image, a moving image of a video, or a video itself.

Hereinafter, the term 'sample' indicates data allocated to a sampling location of an image, the data that is a processing target. For example, pixels in an image of a spatial area may be samples. As another example, residuals that correspond to pixels in an image of a spatial area may be samples.

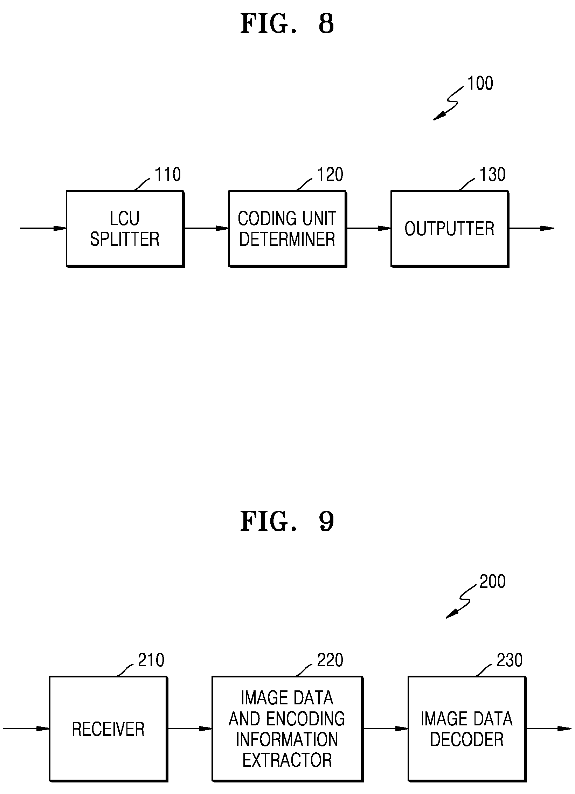

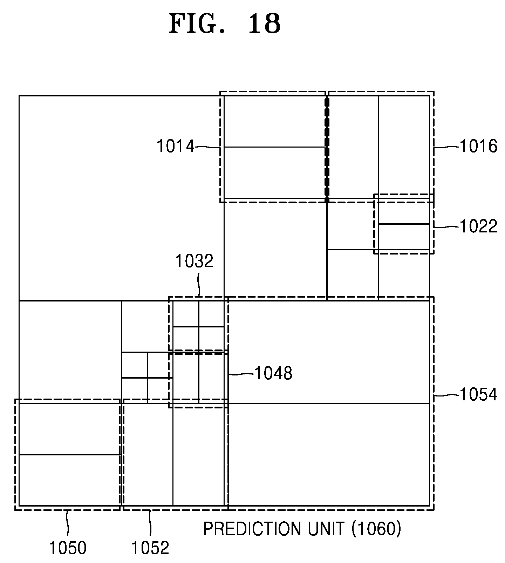

Hereinafter, a type of a block may be a square or a rectangular, or may be an arbitrary geometrical shape. The block is not limited to a data unit having a certain size. A block according to an embodiment may be, from among coding units according to a tree structure, a largest coding unit, a coding unit, a prediction unit, or a transformation unit. Video encoding and decoding methods based on coding units according to a tree structure will be described below with reference to FIGS. 8 through 20.

Also, a block may include all of a sub-unit, a current sub-unit, a reference unit, and a reference sub-unit in relation to terms described later.

Hereinafter, signaling may denote transmitting or receiving of a signal. For example, when image data is encoded, signaling may mean transmitting of an encoded signal. As another example, when image data is decoded, signaling may mean receiving of an encoded signal.

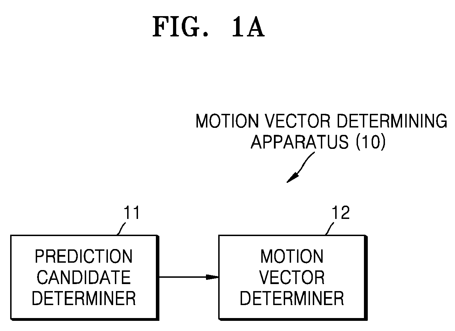

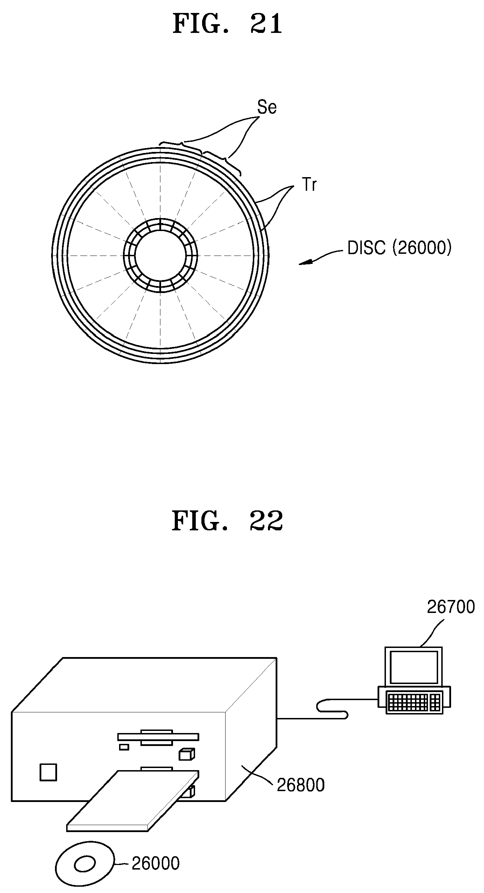

Hereinafter, methods and apparatuses for determining a motion vector in relation to video encoding and decoding, according to various embodiments will be described with reference to FIGS. 1A to 7. Also, a video encoding method and video decoding method based on coding units having a tree structure according to various embodiments that are applicable to the video encoding method and the video decoding method will be described with reference to FIGS. 8 through 20. Various embodiments to which the video encoding method and the video decoding method are applicable will be described with reference to FIGS. 21 through 27.

FIG. 1A is a block diagram of a motion vector determining apparatus 10 according to an embodiment.

As shown in FIG. 1A, the motion vector determining apparatus 10 may include a prediction candidate determiner 11 and a motion vector determiner 12. However, the motion vector determining apparatus 10 may include more or less components than those shown in FIG. 1A.

The motion vector determining apparatus 10 may perform inter prediction by using similarity between a current image and another image. The motion vector determining apparatus 10 may detect a reference block corresponding to a current block of a current image, from a reference image that is reconstructed before the current image. A distance between a current block and a reference block on coordinates may be expressed in a motion vector, and a difference of pixel values between the current block and the reference block may be expressed in residual data. Accordingly, information output via inter prediction of the current block is not image information of the current block, but may be an index, a motion vector, and residual data indicating the reference block.

The motion vector determining apparatus 10 may perform inter-layer prediction by using similarity between a current image and another image. A reference image used to reconstruct the current image may be an image belonging to a layer different from a layer to which the current image belongs. The motion vector determining apparatus 10 may detect a reference block similar to a current block of the current image, from the reference image that is reconstructed before the current image. A distance between the current block and the reference block on coordinates may be expressed in a motion vector, and a difference of pixel values between the current block and the reference block may be expressed in residual data. Accordingly, information output via inter prediction of the current block is not image information of the current block, but may be an index, a motion vector, and residual data indicating the reference image.

Inter-layer motion prediction may be an example of the inter-layer prediction. The inter-layer motion prediction according to an embodiment may include an operation of determining a motion vector used while performing inter prediction on a current image of a current layer, by using a motion vector used while performing inter prediction on a reference image of a reference layer.

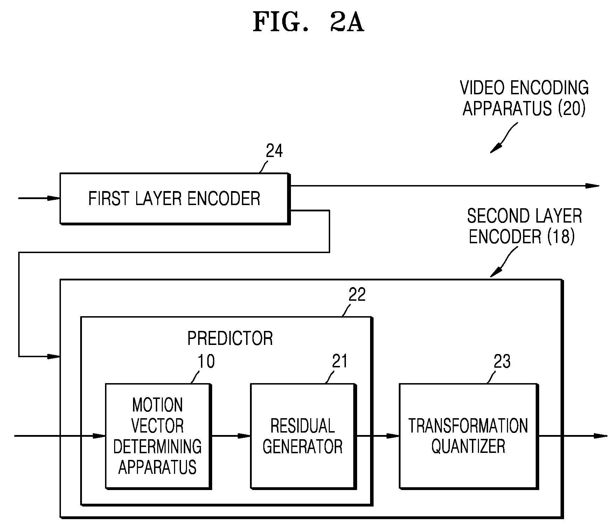

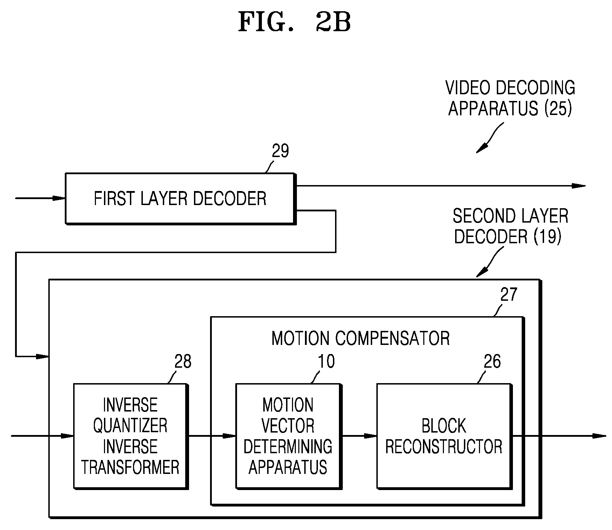

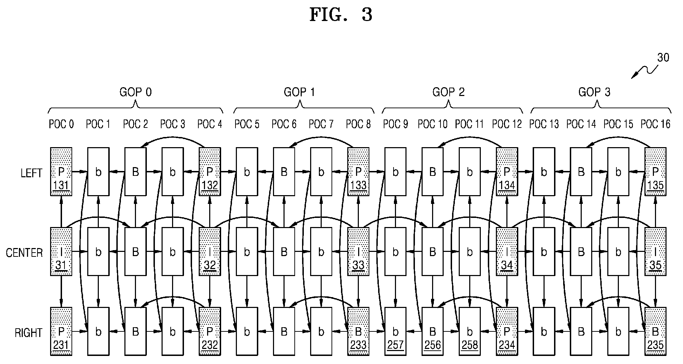

Details about a multi-layer image related to the inter-layer prediction will be described below with reference to FIGS. 2 and 3.

The motion vector determining apparatus 10 according to an embodiment may perform inter prediction or inter-layer prediction according to blocks of each image of a video.

For motion vector prediction, block merging (PU merging), or advanced motion vector prediction (AMVP), a motion vector of a current block may be determined by referring to a motion vector of another block. The other block may include a block of a layer different from that of the current block.

The motion vector determining apparatus 10 according to an embodiment may determine a motion vector of a current block by referring to a motion vector of another block temporally or spatially adjacent to the current block. The motion vector determining apparatus 10 may determine prediction candidates including motion vectors of candidate blocks that may be reference targets of the motion vector of the current block. The motion vector determining apparatus 10 may determine the motion vector of the current block by referring to one motion vector selected from the motion vectors of the prediction candidates.

A prediction unit according to an embodiment may denote a unit that is a base of prediction and split from a coding unit.

A prediction unit according to an embodiment is split from a coding unit, and the coding unit may be split only once without being split in a quad-tree shape. For example, a coding unit may be split into a plurality of prediction units, and the prediction units may not be additionally split.

A prediction unit according to another embodiment may be split into sub-units. For example, one prediction unit may be split into a plurality of sub-units.

According to the above embodiment, when one prediction unit is split into a plurality of sub-units, intra prediction, inter prediction, or inter-layer prediction may be performed according to sub-units.

A motion vector may include a disparity vector. For example, when a reference block corresponding to a current block is encoded in an intra mode, a disparity vector matching the current block and the reference block may be a disparity vector used to decode the current block.

A motion vector may be used when inter prediction or inter-layer prediction is performed.

For example, the motion vector determining apparatus 10 may determine a reference sub-unit corresponding to a current sub-unit by using a motion vector for performing inter prediction on the current sub-unit. At this time, the reference sub-unit may be included in the same layer as the current sub-unit. Also, an encoder may express a difference of pixel values between the determined reference sub-unit and the current sub-unit in residual data. The encoder may output an index, a motion vector, and determined residual data indicating the reference sub-unit, instead of directly outputting image information of the current sub-unit.

As another example, the motion vector determining apparatus 10 may determine a reference sub-unit corresponding to a current sub-unit by using a motion vector for performing inter-layer prediction on the current sub-unit. At this time, the reference sub-unit may be included in a layer different from that of the current sub-unit. Also, an encoder may express a difference of pixel values between the determined reference sub-unit and the current sub-unit in residual data. The encoder may output an index, a motion vector, and determined residual data indicating the reference sub-unit, instead of directly outputting image information of the current sub-unit.

As another example, in order to determine a motion vector for performing inter prediction on a current sub-unit, the motion vector determining apparatus 10 may use a motion vector used in inter prediction of a reference sub-unit included in a layer different from that to which the current sub-unit belongs.

As another example, when a current sub-unit is decoded by using inter prediction, the motion vector determining apparatus 10 may reconstruct residual data of the current sub-unit by receiving a motion vector of the current sub-unit, quantized transformation coefficients, and an index of a reference sub-unit. Then, a decoder may reconstruct the current sub-unit by performing motion compensation on the current sub-unit encoded via inter prediction or inter-layer prediction.

As another example, the motion vector determining apparatus 10 may determine a reference sub-unit corresponding to a current sub-unit by using a motion vector for performing inter-layer prediction on the current sub-unit. At this time, the reference sub-unit may be included in a layer different from that of the current sub-unit.

As another example, the motion vector determining apparatus 10 may use a motion vector used for inter prediction of a reference sub-unit included in a layer different from that to which a current sub-unit belongs, in order to determine a motion vector for inter prediction of the current sub-unit.

A sub-unit according to an embodiment may denote a block generated as a prediction unit included in a current layer is split.

Also, a current sub-unit according to an embodiment may mean a sub-unit that is currently encoded or decoded.

Also, a sub-motion vector prediction candidate according to an embodiment may mean a candidate motion vector used for inter prediction or inter-layer prediction of a current sub-unit.

Also, a prediction candidate according to an embodiment may mean a candidate motion vector used for inter prediction or inter-layer prediction of a current sub-unit or a prediction unit. A prediction candidate according to an embodiment may include the sub-motion vector prediction candidate described above.

Also, a reference unit according to an embodiment may mean a block corresponding to a prediction unit included in a current layer. The reference unit may be included in the current layer or in a reference layer. For example, the reference unit may mean a reference block used to perform inter prediction or inter-layer prediction on the prediction unit.

Also, a reference sub-unit according to an embodiment may mean a block generated as a reference unit included in a reference layer is split.

The prediction candidate determiner 11 according to an embodiment may split a prediction unit into a plurality of sub-units when a size of the prediction unit belonging to a current layer is larger than a pre-set size.

For example, the prediction candidate determiner 11 may split a prediction unit into a plurality of sub-units when a size of the prediction unit belonging to a current layer is larger than $8 \times 8$. Here, when the size of the prediction unit is 8x8, 8x4, or 4x8, the prediction unit is not split into sub-units, but a motion vector may be determined according to prediction units.

As another example, the prediction candidate determiner 11 may split a prediction unit into a plurality of sub-units when a size of the prediction unit belonging to a current layer is larger than 4x4.

As another example, the prediction candidate determiner 11 may split a prediction unit into a plurality of sub-units when a sum of a width and a height of the prediction unit is not 12.

As another example, the prediction candidate determiner 11 may split a prediction unit into a plurality of sub-units when a sum of a width and a height of the prediction unit is larger than 12.

As another example, the prediction candidate determiner 11 may split a prediction unit into a plurality of sub-units when a size of the prediction unit is neither $8 \times 4$ nor 4x8.

As another example, the prediction candidate determiner 11 may split a prediction unit into a plurality of sub-units when a size of the prediction unit is not $8 \times 4$, not $4 \times 8$, and not $8 \times 8$.

As another example, the prediction candidate determiner 11 may split a prediction unit into a plurality of sub-units only when a size of the prediction unit is $2N \times 2N$.

As another example, the prediction candidate determiner 11 may split a prediction unit into a plurality of sub-units when a size of the prediction unit is larger than $N \times N$.

The prediction candidate determiner 11 according to an embodiment may not split a prediction unit into sub-units when a size of the prediction unit is smaller than or equal to a pre-set size. In this case, a video encoder or a video decoder may perform inter-layer prediction or inter prediction according to prediction units.

$2N \times 2N$, $2N \times N$, Nx2N, or $N \times N$ may denote a size of a coding unit, a prediction unit, or a sub-unit. For example, when a size of a coding unit is $2N \times 2N$, and the size is in a range from $8 \times 8$ to 64x64, N may be one of 4, 8, 16, and 32. As another example, when a size of a coding unit is $2N \times 2N$ and a size of a prediction unit is $2N \times 2N$, only one prediction unit exist in one coding unit. As another example, when a size of a coding unit is $2N \times 2N$ and a size of a prediction unit is Nx2N, two prediction units may exist in one coding unit.

When the prediction candidate determiner 11 according to an embodiment splits a prediction unit into a plurality of sub-units, a size of a smallest sub-unit may be pre-set.

For example, when the prediction candidate determiner 11 splits a prediction unit into a plurality of sub-units, a size of a smallest sub-unit may be $8 \times 8$.

As another example, when the prediction candidate determiner 11 splits a prediction unit into a plurality of sub-units, a size of a smallest sub-unit may be at least one of $4 \times 4$, $4 \times 8$, and $8 \times 4$.

The prediction candidate determiner 11 according to an embodiment may split a prediction unit into a pre-set number of sub-units according to a size of the prediction unit, while splitting the prediction unit into a plurality of sub-units.

For example, when a size of a prediction unit is $16 \times 16$, the prediction unit may be split into four sub-units, wherein four is pre-set.

As another example, when a size of a prediction unit is $32 \times 16$, the prediction unit may be split into eight sub-units, wherein eight is pre-set.

As another example, when a size of a prediction unit is $2N \times 2N$, the prediction unit may be split into eight sub-units, wherein eight is pre-set.

As another example, when a size of a prediction unit is $2N \times N$, the prediction unit may be split into four sub-units, wherein four is pre-set.

As another example, when a size of a prediction unit is $N \times 2N$, the prediction unit may be split into sixteen sub-units, wherein sixteen is pre-set.

A smallest size of a sub-unit according to an embodiment may be pre-set.

The prediction candidate determiner 11 according to an embodiment may split a prediction unit into sixteen sub-units when a size of the prediction unit is $2N \times 2N$, and into eight sub-units when the size of the prediction unit is $N \times 2N$ or $2N \times N$.

The prediction candidate determiner 11 according to an embodiment may split a prediction unit into sub-units having a size of $8 \times 8$ when a size of the prediction unit is $16 \times 16$, $16 \times 8$, or $8 \times 16$, and may not split a prediction unit when a size of the prediction unit is $8 \times 8$, $8 \times 4$, or $4 \times 8$.

As another example, the prediction candidate determiner 11 may split a prediction unit into a largest number of sub-units of $8 \times 8$ blocks that may be included in the prediction unit without any overlapping area.

As another example, the prediction candidate determiner 11 may split a prediction unit into a largest number of sub-units of blocks having a pre-set size that may be included in the prediction unit without any overlapping area.

A pre-set size according to an embodiment used to determine whether to split a prediction unit into a plurality of sub-units may be signaled.

For example, the prediction candidate determiner 11 may obtain a pre-set size by parsing a received bitstream. Also, the prediction candidate determiner 11 may split a prediction unit into a plurality of sub-units when a size of the prediction unit is larger than a pre-set size obtained by parsing a received bitstream.

As another example, a video encoding apparatus 20 may externally transmit a pre-set size according to an embodiment used to determine whether to split a prediction unit into a plurality of sub-units, through a bitstream.

A pre-set size according to an embodiment may be signaled via at least one of a video parameter set (VPS), a sequence parameter set (SPS), a picture parameter set (PPS), and a slice segment header.

The prediction candidate determiner 11 according to an embodiment may determine a reference sub-unit belonging to a reference layer used for inter-layer prediction of a current sub-unit that is one of sub-units.

An image may include images of a plurality of layers. In order to reconstruct a current sub-unit belonging to a current layer, a reference sub-unit belonging to a reference layer may be used. For example, the prediction candidate determiner 11 may determine a motion vector for inter prediction of a current sub-unit by using a motion vector for inter prediction of a reference sub-unit.

The prediction candidate determiner 11 according to an embodiment may use a disparity vector while determining a reference sub-unit corresponding to a current sub-unit. A disparity vector may be used while matching a current block of a current layer and a reference block of a reference layer.

A reference unit corresponding to a current unit may be split into a plurality of reference sub-units. Also, one of the plurality of reference sub-units may correspond to a current sub-unit.

When a block belonging to a reference layer used for inter-layer prediction of a prediction unit belonging to a current layer is a reference unit, a reference sub-unit may be obtained by splitting the reference unit.

The prediction candidate determiner 11 according to an embodiment may determine a sub-motion vector prediction candidate for inter prediction of a current sub-unit by using a motion vector for inter prediction of a reference sub-unit.

A first motion vector may be used for inter prediction of a reference sub-unit. Also, a second motion vector may be used for inter prediction of a current sub-unit. A sub-motion vector prediction candidate may be used for inter prediction of a current sub-unit. The sub-motion vector prediction candidate may be determined by using the first motion vector. For example, the prediction candidate determiner 11 may determine the first motion vector as the sub-motion vector prediction candidate.

Also, a sub-motion vector prediction candidate may be one of candidate motion vectors for inter prediction of a current sub-unit. For example, the sub-motion vector prediction candidate may be the same as a second motion vector.

The motion vector determining apparatus 10 according to an embodiment may determine a second motion vector by using a first motion vector.

In detail, the prediction candidate determiner 11 may include a first motion vector to prediction candidates for determining a second motion vector. The motion vector determiner 12 may select a motion vector used for inter prediction of a current sub-unit from among motion vectors included in prediction candidates.

The video encoding apparatus 20 or a video decoding apparatus 25 according to an embodiment may determine a candidate block to be referenced by a current sub-unit, from among blocks corresponding to the current sub-unit included in an image temporally before or after a current image. Also, the video encoding apparatus 20 or the video decoding apparatus 25 according to an embodiment may select a motion vector used to determine the candidate block to be referenced by the current sub-unit, from among motion vectors of prediction candidates. A first motion vector may be included in the prediction candidates for inter prediction of a reference sub-unit.

The motion vector determiner 12 according to an embodiment may determine a motion vector for inter prediction of a current sub-unit by using one of predication candidates including a sub-motion vector prediction candidate.

For example, the motion vector determiner 12 may determine a sub-motion vector prediction candidate determined by the prediction candidate determiner 11 as a motion vector for inter prediction or intra prediction of a current sub-unit. As another example, the motion vector determiner 12 may determine a motion vector used for inter prediction of a reference sub-unit as a motion vector used for inter prediction of a current sub-unit. As another example, when a unit performing inter prediction is not a prediction unit, but a sub-unit, the motion vector determiner 12 may determine a motion vector for inter prediction of a reference sub-unit determined by the prediction candidate determiner 11 as a motion vector for inter prediction of a current sub-unit.

The motion vector determiner 12 according to an embodiment may generate prediction candidates including candidate motion vectors of blocks referenced to predict a motion vector of a current sub-unit.

The motion vector determiner 12 according to an embodiment may select at least one candidate motion vector from among candidate motion vectors included in prediction candidates, and determine a motion vector of a current block by using the selected at least one candidate motion vector. The motion vector determiner 12 may determine the motion vector of the current block by intactly copying, combining, or modifying the selected at least one candidate motion vector.

As described above, the motion vector determining apparatus 10 may determine a motion vector according to sub-units obtained by splitting a prediction unit.

Also, as will be described later with reference to FIG. 2, a video encoder or a video decoder may perform inter prediction or inter-layer prediction according to sub-units by using a motion vector determined by the motion vector determining apparatus 10.

When inter prediction or inter-layer prediction is performed according to sub-units that are smaller than a prediction unit by using the motion vector determining apparatus 10 according to an embodiment, an image having high image quality may be obtained compared to when prediction is performed according to prediction units.

When inter prediction or inter-layer prediction is performed according to sub-units, the motion vector determining apparatus 10 according to an embodiment may determine a motion vector of a current sub-unit to be a motion vector of a reference sub-unit without having whether another candidate motion vector is the motion vector of the current sub-unit.

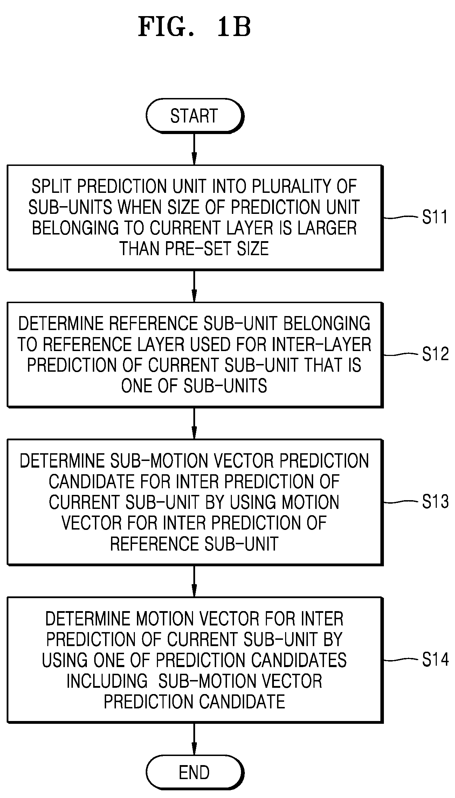

FIG. 1B is a flowchart of a motion vector determining method according to an embodiment.

In operation S11, the prediction candidate determiner 11 splits a prediction unit into a plurality of sub-units when a size of the prediction unit belonging to a current layer is larger than a pre-set size.

For example, the pre-set size may be $8\times8$. When the pre-set size is $8\times8$, the prediction candidate determiner 11 may split the prediction unit into the plurality of sub-units when the size of the prediction unit belonging to the current layer is larger than $8\times8$.

The pre-set size according to an embodiment may be signaled. Accordingly, the prediction candidate determiner 11 according to an embodiment may parse a received bitstream to obtain the pre-set size, and split the prediction unit into the plurality of sub-units when the size of the prediction unit is larger than the obtained pre-set size.

In operation S12, the prediction candidate determiner 11 determines a reference sub-unit belonging to a reference layer used for inter-layer prediction of a current sub-unit that is one of the sub-units obtained in operation S11.

The prediction candidate determiner 11 may determine the reference sub-unit included in a layer different from that of the current sub-unit. Also, the prediction candidate determiner 11 may obtain a motion vector for inter prediction of the determined reference sub-unit.

The prediction candidate determiner 11 may use a disparity vector matching the current sub-unit and the reference sub-unit, while determining the reference sub-unit.

Also, in operation S13, as will be described later, the prediction candidate determiner 11 may determine a sub-motion vector prediction candidate for inter prediction of the current sub-unit by using the obtained motion vector.

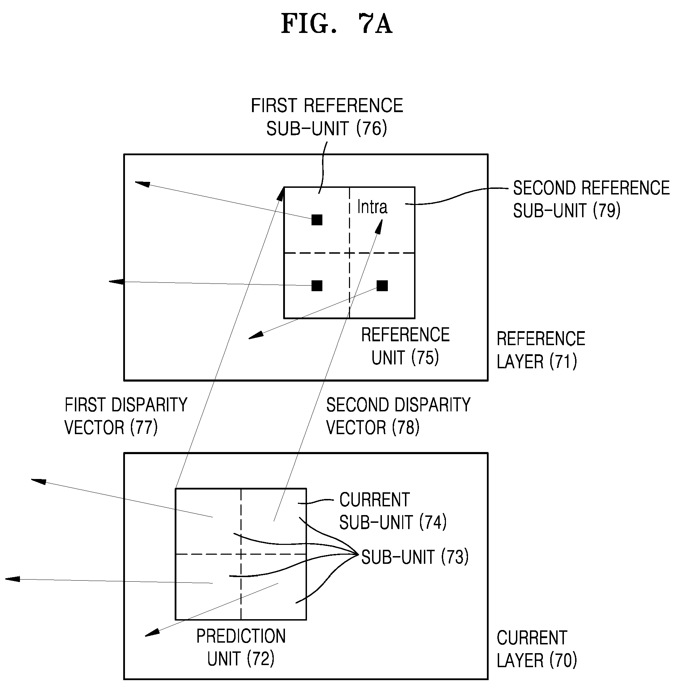

Also, as will be described later with reference to FIG. 7A, when an encoding method of a reference sub-unit is in an intra mode, a sample value of the reference sub-unit may be used to encode or decode a current sub-unit.

In operation S 13, the prediction candidate determiner 11 determines the sub-motion vector prediction candidate for inter prediction of the current sub-unit by using a motion vector for inter prediction of the reference sub-unit determined in operation S12.

The prediction candidate determiner 11 may use the motion vector of the reference sub-unit for determining the sub-motion vector prediction candidate used in inter prediction of the current sub-unit.

For example, the prediction candidate determiner 11 may determine the motion vector for inter prediction of the reference sub-unit determined in operation S12 as the sub-motion vector prediction candidate for inter prediction of the current sub-unit.

The sub-motion vector prediction candidate may include another candidate motion vector as well as the motion vector for inter prediction of the reference sub-unit determined in operation S12.

In operation S14, the motion vector determiner 12 determines a motion vector for inter prediction of the current sub-unit by using one of prediction candidates including the sub-motion vector prediction candidate determined in operation S13.

For example, when a unit performing inter prediction is a sub-unit and not a prediction unit, the motion vector determiner 12 may determine the motion vector for inter prediction of the reference sub-unit determined in operation S12 as the motion vector for inter prediction of the current sub-unit.

Also, as will be described later, an encoder or a decoder may perform motion compensation on the current sub-unit by using the motion vector determined in operation S 14. The current sub-unit may be encoded or decoded via the motion compensation using the motion vector determined in operation S14. Motion compensation may denote an operation of generating a reconstructed image of a current image by composing a reference image determined by using a motion vector of the current image and a residual component of the current image.

FIG. 2A is a block diagram of the video encoding apparatus 20 involving a motion vector determining method, according to an embodiment.

As shown in FIG. 2A, the video encoding apparatus 20 may include a second layer encoder 18 and a first layer encoder 24. The second layer encoder 18 may include a predictor 22 and a transformation quantizer 23. The predictor 22 may include the motion vector determining apparatus 10 according to an embodiment, and a residual generator 21. However, the video encoding apparatus 20 may include more or less components than those shown in FIG. 2A.

The video encoding apparatus 20 may generate a data stream. The data stream generated by the video encoding apparatus 20 may be configured of Network Abstraction Layer (NAL) units.

The NAL unit is a basic unit that configures a bitstream. Also, one or more NAL units may configure a data stream. The video encoding apparatus 20 may transmit the data stream configured of one or more NAL units to an external source.

According to an embodiment, each of the NAL units may include 2-byte header information. According to an embodiment, the video encoding apparatus 20 may identify overall information of inner data of each of the NAL units by including 2-byte header information in each of the NAL units.

Hereinafter, an encoding process of the video encoding apparatus 20 will be described.

The video encoding apparatus 20 according to various embodiments may classify and encode a plurality of image sequences for each layer according to scalable video coding, and may output a separate stream including data encoded for each layer. Also, the video encoding apparatus 20 may transform and output bitstreams output for each layer as one bitstream by multiplexing.

The video encoding apparatus 20 according to various embodiments may classify and encode a plurality of image sequences for each layer according to scalable video coding, and may output a separate stream including data encoded for each layer. Also, the video encoding apparatus 20 may encode a first layer image sequence and a second layer image sequence according to different layers.

The first layer encoder 24 may encode first layer images, and output a first layer stream that includes encoding data of the first layer images.

The second layer encoder 18 may encode second layer images, and output a second layer stream including encoding data of the second layer images.

For example, according to scalable video coding based on spatial scalability, low resolution images may be encoded as the first layer images, and high resolution images may be encoded as the second layer images. An encoding result of the first layer images may be output in a first layer stream. An encoding result of the second layer images may be output in a second layer stream.

As another example, a multi-view video may be encoded according to scalable video coding. Left view images may be encoded as the second layer images, and right view images may be encoded as the first layer images. Alternatively, center view images, left view images, and right view images may be encoded respectively as first layer images, second layer images, and third layer images.

As another example, scalable video coding may be performed according to temporal hierarchical prediction based on temporal scalability. A first layer stream including encoding information generated by encoding images of a base frame rate may be output. Temporal levels may be classified for each frame rate and may be respectively encoded in layers. A second layer stream including encoding information of a high speed frame rate may be output by further encoding images of the high frame rate with reference to the images of the basic frame rate.

Scalable video coding may be performed on a first layer and a plurality of second layers. In the presence of three or more second layers, first layer images, first second layer images, second second layers images, ..., Kth second layer images may be encoded. Accordingly, an encoding result of the first layer images may be output in the first layer stream, and encoding results of the first through Kth second layer images may be respectively output in first through Kth second layer streams.

The video encoding apparatus 20 may perform inter-layer prediction for predicting the second layer images with reference to the first layer images. For example, the video encoding apparatus 20 may predict the second layer images with reference to first layer images, wherein a first layer may denote a layer referenced to encode a second layer. Therefore, a first layer may correspond to a second layer, and a second layer may correspond to a first layer.

According to various embodiments, the video encoding apparatus 20 may generate symbol data by performing source coding operations including inter prediction or intra prediction of first layer images. For example, the video encoding apparatus 20 may generate symbol data by performing inter prediction or intra prediction, transformation, quantization on samples of data units of the first layer images, and may generate a first layer stream by performing entropy encoding on the symbol data.

The video encoding apparatus 20 may encode second layer images based on coding units having a tree structure. The video encoding apparatus 20 may generate symbol data by performing prediction, transformation, and quantization on samples of coding units of a second layer image, and may generate a second layer stream by performing entropy encoding on the symbol data.

According to various embodiments, the video encoding apparatus 20 may perform inter-layer prediction for predicting a second layer image, by using a reconstruction sample of a first layer image. In order to encode a second layer original image in a second layer image sequence based on an inter-layer prediction structure, the video encoding apparatus 20 may generate a second layer prediction image by using a first layer reconstruction image, and encode a prediction error between the second layer original image and the second layer prediction image.

The video encoding apparatus 20 may perform inter-layer prediction on a second layer image for each block such as coding units or prediction units. The video encoding apparatus 20 may determine a block of a first layer image that is to be referenced by a block of the second layer image. For example, a reconstruction block of the first layer image may be determined according to a location of a current block in the second layer image. The video encoding apparatus 20 may determine a second layer prediction block by using a first layer reconstruction block that corresponds to a second layer block.

According to an embodiment, when inter-layer prediction is performed on a second layer by referencing a first layer, the second layer may be referred to as a current layer and the first layer may be referred to as a reference layer.

According to an embodiment, when inter-layer prediction is performed on an enhancement layer by referencing a base layer, a current layer may be the enhancement layer and a reference layer may be the base layer.

According to an embodiment, when inter-layer prediction is performed on a second layer by referencing a first layer, the video encoding apparatus 20 may encode a first layer image before a second layer image.

According to an embodiment, when inter-layer prediction is performed on an enhancement layer by referencing a base layer, the video encoding apparatus 20 may encode a base layer image before an enhancement layer image.

The video encoding apparatus 20 according to various embodiments may perform encoding according to blocks of each image of a video, for each layer.

Hereinafter, encoding operations performed by the video encoding apparatus 20 are described.

The motion vector determining apparatus 10 according to an embodiment may determine a motion vector for inter prediction or inter-layer prediction of a prediction unit or a current sub-unit.

The motion vector determining apparatus 10 according to an embodiment may determine neighboring blocks spatially adjacent to the current sub-unit, blocks existing at the same location as the current sub-unit from among images temporally before or after the current image, or candidate blocks to be referenced by the current sub-unit from among reference sub-units included in a reference layer corresponding to the current sub-unit.

Also, the motion vector determining apparatus 10 according to an embodiment may determine a motion vector of the current sub-unit by using a motion vector of the determined candidate block.

Detailed operations of the motion vector determining apparatus 10 have been described above with reference to FIG. 1A.

The residual generator 21 according to an embodiment may generate residual data between a reference block and a current block by using the reference block indicated by a motion vector of the current block in a reference image included in the same layer as the current block. For example, the residual generator 21 may determine the reference block indicated by the motion vector determined by the motion vector determining apparatus 10, and generate residual data between a current sub-unit and the reference block. Here, the current sub-unit and the reference block may both be included in a current layer.

The residual generator 21 according to an embodiment may generate residual data between a reference block and a current block by using the reference block indicated by a motion vector of the current block in a reference image included in a layer different from that of the current block. For example, the residual generator 21 may determine the reference block indicated by the motion vector determined by the motion vector determining apparatus 10, and generate residual data between a current sub-unit and the reference block. Here, the current sub-unit may be included in a current layer, and the reference block may be included in a reference layer.

Accordingly, the predictor 22 may output residual data according to blocks as results of performing inter prediction or inter-layer prediction according to blocks. For example, the predictor 22 may output residual data according to results of performing inter prediction or inter-layer prediction according to current sub-units.

The transformation quantizer 23 according to an embodiment may generate quantized transformation coefficients by performing transformation and quantization on residual data output by the predictor 22. The transformation quantizer 23 may generate quantized transformation coefficients according to blocks by performing transformation and quantization on the residual data according to blocks received from the predictor 22.

The video encoding apparatus 20 may output an encoded bitstream by performing entropy encoding on the quantized transformation coefficient generated by the transformation quantizer 23. Also, when a reference index and a motion vector are also output from the predictor 22, the video encoding apparatus 20 may output a bitstream by performing entropy encoding on not only the quantized transformation coefficient, but also the reference index and the motion vector.

The video encoding apparatus 20 according to an embodiment may use a merge mode or advanced motion vector prediction (AMVP) while transmitting data about the determined motion vector. The video encoding apparatus 20 according to an embodiment may form a list of adjacent blocks for determining a motion vector, and transmit selection information that is information about which block from among the adjacent blocks in the list to be selected to the video decoding apparatus 25, thereby reducing an amount of motion-related data. Also, the video encoding apparatus 20 may reduce an amount of motion information transmitted in prediction units by using a merge mode or AMVP. The motion information may include information about a motion vector.

A merge mode according to an embodiment is a method of determining a motion vector of a current block by using a reference block. The video encoding apparatus 20 according to an embodiment may determine at least one spatial candidate block that is a block located near a current block, in a merge mode. Also, the video encoding apparatus 20 according to an embodiment may determine at least one temporal candidate block that is a block included in a picture of a time different from that of a current block, in a merge mode. Also, the video encoding apparatus 20 according to an embodiment may determine at least one candidate block included in a reference layer, in a merge mode. The video encoding apparatus 20 may use a disparity vector while determining a candidate block. Here, a disparity vector may denote a motion vector used to match a current block and a candidate block. Also, the video encoding apparatus 20 according to an embodiment may determine a candidate block included in a reference layer by using a motion vector of a reference block.

The video encoding apparatus 20 according to an embodiment may determine candidate blocks used to determine a motion vector of a current block by combining candidate blocks determined according to the method described above.

Candidate blocks according to an embodiment may be included in a reference picture. One or more reference pictures may be included in two lists. When the two lists are respectively referred to as a reference picture list 0 and a reference picture list 1, a motion vector of a current block may be determined by using a first motion vector obtained from a candidate block in a reference picture included in the reference picture list 0, and a second motion vector obtained from a candidate block in a reference picture included in the reference picture list 1. For example, one of the first and second motion vectors may be the motion vector of the current block. As another example, a new motion vector determined by combining the first and second motion vectors may determined as the motion vector of the current block.

An AMVP mode according to an embodiment may denote a method of reconstructing a current block by using at least one of a differential motion vector, reference picture distinguishing information, and a reference index.

A differential motion vector according to an embodiment may denote a value corresponding to a difference value between two motion vectors. For example, the video encoding apparatus 20 may transmit a differential value of a motion vector by using two motion vectors referenced to reconstruct a current block.

Reference picture distinguishing information according to an embodiment may indicate a list of pictures to which a reference block is included, the reference block being used to perform inter prediction or inter-layer prediction of a current block. For example, when inter prediction is performed, the reference picture distinguishing information may indicate whether candidate blocks included in L0 are used, candidate blocks included in L1 are used, or candidate blocks included both in L1 and L2 are used.

A reference index according to an embodiment may denote an index indicating a reference picture in a picture list used while performing inter prediction or inter-layer prediction of a current block.

The video encoding apparatus 20 according to an embodiment may signal a merge index while transmitting data about a determined motion vector by using a merge mode.

For example, the video encoding apparatus 20 may determine candidate blocks used while determining a motion vector of a current block from among blocks on which motion prediction is performed. The video encoding apparatus 20 may transmit a merge index that is information indicating a block selected from among candidate blocks to the video decoding apparatus 25.

The video encoding apparatus 20 according to an embodiment may signal at least one of the differential motion vector, the reference picture distinguishing information, and the reference index in order to transmit data about a motion vector determined by using AMVP.

The video encoding apparatus 20 according to an embodiment may include a central processor (not shown) that generally controls the motion vector determining apparatus 10, the residual generator 21, and the transformation quantizer 23. Alternatively, the motion vector determining apparatus 10, the residual generator 21, and the transformation quantizer 23 may operate by their respective processors (not shown), and the video encoding apparatus 20 may generally operate according to interactions of the processors (not shown). Alternatively, the motion vector determining apparatus 10, the residual generator 21, and the transformation quantizer 23 may be controlled according to the control of an external processor (not shown) of the video encoding apparatus 20.

The video encoding apparatus 20 according to an embodiment may include one or more data storage units (not shown) in which input and output data of the motion vector determining apparatus 10, the residual generator 21, and the transformation quantizer 23 is stored. The video encoding apparatus 20 may include a memory control unit (not shown) that observes data input and output of the data storage units (not shown).

The video encoding apparatus 20 according to an embodiment may operate in connection with an internal video encoding processor or an external video encoding processor so as to output video encoding results, thereby performing a video encoding operation including transformation. Not only a separate processor, but also the video encoding apparatus 20, a central processor, or a graphic processor may include a video encoding processing module so that the internal video encoding processor of the video encoding apparatus 20 the internal video encoding processor of the video encoding apparatus 20 may perform basic video encoding

FIG. 2B is a block diagram of the video decoding apparatus 25 involving a motion vector determining method, according to an embodiment.

As shown in FIG. 2B, the video decoding apparatus 25 may include a base layer decoder 29 and an enhancement layer decoder 19. The enhancement layer decoder 19 may include an inverse quantizer inverse transformer 28 and a motion compensator 27. The motion compensator 27 may include the motion vector determining apparatus 10 according to an embodiment and a block reconstructor 26. However, the video decoding apparatus 25 may include more or less components than those shown in FIG. 2B.

The video decoding apparatus 25 according to an embodiment may perform decoding on a current block. A current block may include a prediction unit and a current sub-unit.

Also, the video decoding apparatus 25 according to an embodiment may use a motion vector of a candidate block while performing decoding on the current block. A candidate block may include a reference unit and a reference sub-unit.

The video decoding apparatus 25 according to various embodiments may receive bitstreams for each layer according to scalable encoding. The number of layers of the bitstreams received by the video decoding apparatus 25 is not limited. However, for convenience of description, an embodiment in which the first layer decoder 29 of the video decoding apparatus 25 receives and decodes a first layer stream and the second layer decoder 19 receives and decodes a second layer stream will be described.

For example, the video decoding apparatus 25 based on spatial scalability may receive streams in which image sequences of different resolutions are encoded according to different layers. A low resolution image sequence may be reconstructed by decoding the first layer stream, and a high resolution image sequence may be reconstructed by decoding the second layer stream.

As another example, a multi-view video may be decoded according to scalable video coding. When a stereoscopic video stream is received in multiple layers, the first layer stream may be decoded to reconstruct left view images. The second layer stream may be further decoded to the first layer stream to reconstruct right view images.

Alternatively, when a multi-view video stream is received in multiple layers, a first layer stream may be decoded to reconstruct center view images. A second layer stream may be further decoded to the first layer stream to reconstruct the left view images. A third layer stream may be further decoded to the first layer stream to reconstruct the right view images.

As another example, scalable video coding based on temporal scalability may be performed. The first layer stream may be decoded to reconstruct base frame rate images. The second layer stream may be further decoded to the first layer stream to reconstruct high speed frame rate images.

Also, in the presence of three or more current layers, first layer images may be reconstructed from the first layer stream. If the second layer stream is further decoded by referring to first layer reconstruction images, second layer images may be further reconstructed. If a Kth layer stream is further decoded by referring to second layer reconstruction images, Kth layer images may be further reconstructed.

The video decoding apparatus 25 may obtain encoded data of the first layer images and second layer images from the first layer stream and the second layer stream and may further obtain a motion vector generated through inter prediction and prediction information generated through inter-layer prediction.

For example, the video decoding apparatus 25 may decode inter-predicted data for each layer and may decode inter-layer-predicted data between a plurality of layers. Reconstruction may be performed through motion compensation and inter-layer decoding based on a coding unit or a prediction unit.

Motion compensation for a current image is performed by referring to reconstruction images predicted through inter prediction of a same layer on each layer stream, and thus images may be reconstructed. Motion compensation means an operation of synthesizing a reference image determined by using a motion vector of the current image and a residual of the current image and reconfiguring a reconstruction image of the current image.

Also, the video decoding apparatus 25 may perform inter-layer decoding with reference to prediction information of first layer images so as to decode a second layer image predicted through inter-layer prediction. Inter-layer decoding means an operation of reconfiguring a prediction information of a current image by using prediction information of a reference block of a different layer in order to determine the prediction information of the current image.

The video decoding apparatus 25 according to various embodiments may perform inter-layer decoding for reconstructing third layer images predicted with reference to second layer images. An inter-layer prediction structure will be described later with reference to FIG. 3.

However, the second layer decoder 19 according to various embodiments may decode the second layer stream without referring to the first layer image sequence. Thus, it is not limited to construe that the second layer decoder 19 performs only inter-layer prediction in order to decode the second layer image sequence.

The video decoding apparatus 25 may decode each image of a video for each block. A block may include a largest coding unit, a coding unit, a prediction unit, a transformation unit, etc. among coding units according to a tree structure.

The first layer decoder 29 may decode the first layer image by using encoding symbols of a parsed first layer image. If the video decoding apparatus 25 receives encoded streams based on coding units having a tree structure, the first layer decoder 29 may perform decoding based on the coding units having the tree structure for each largest coding unit of the first layer stream.

The first layer decoder 29 may perform entropy encoding for each largest coding unit and may obtain encoding information and encoded data. The first layer decoder 29 may perform inverse quantization and inverse transformation on the encoded data obtained from streams to reconstruct a residual component. The first layer decoder 29 according to another embodiment may directly receive a bitstream of quantized transformation coefficients. A residual component of the images may be reconstructed as a result of performing inverse quantization and inverse transformation on the quantized transformation coefficients.

The first layer decoder 29 may reconstruct the first layer images by determining a prediction image, combining the prediction image and the residual component through motion compensation between same layer images.

The second layer decoder 19 may generate a second layer prediction image by using samples of a first layer reconstruction image according to an inter-layer prediction structure. The second layer decoder 19 may decode the second layer stream to obtain a prediction error according to inter-layer prediction. The second layer decoder 19 may combine the second layer prediction image and the prediction error, thereby generating the second layer reconstruction image.

The second layer decoder 19 may determine the second layer prediction image using the decoded first layer reconstruction image. The second layer decoder 19 may determine a block of the first layer image to which a block such as a coding unit or a prediction unit of the second layer image is to refer according to the inter-layer prediction structure. For example, a reconstruction block of the first layer image located in the second layer image in correspondence to a location of a current block may be determined. The second layer decoder 19 may determine a second layer prediction block using a first layer reconstruction block corresponding to a second layer block.

The second layer decoder 19 may use the second layer prediction block determined using the first layer reconstruction block according to the inter-layer prediction structure as a reference image for inter-layer predicting of a second layer original block. In this case, the second layer decoder 19 may reconstruct the second layer block by synthesizing a sample value of the second layer prediction block determined using the first layer reconstruction image and a residual component according to inter-layer prediction.

According to an embodiment, when inter-layer prediction is performed on a second layer by referring to a first layer, the second layer may be a current layer and the first layer may be a reference layer.

According to an embodiment, when inter-layer prediction is performed on an enhancement layer by referring to a base layer, a current layer may be referred to as the enhancement layer and a reference layer may be referred to as the base layer.

According to an embodiment, when inter-layer prediction is performed on a second layer by referring to a first layer, the video decoding apparatus 25 may decode a first layer image before a second layer image.

According to an embodiment, when inter-layer prediction is performed on an enhancement layer by referring to a base layer, the video decoding apparatus 25 may decode a base layer image before an enhancement layer image.

The video decoding apparatus 25 may receive a data stream. The data stream received by the video decoding apparatus 25 may be configured of NAL units.

The NAL unit is a basic unit that configures a bitstream. Also, one or more NAL units may configure a data stream. The video decoding apparatus 25 may transmit the data stream configured of one or more NAL units to an external source.

The video decoding apparatus 25 may receive the data stream, separate the data stream into NAL units, and decode each of the NAL units.

Each of the NAL units may include 2-byte header information. Also, the video decoding apparatus 25 decode the 2-byte header information in each of the NAL units so as to identify overall information of inner data of each of the NAL units.

The video decoding apparatus 25 according to various embodiments may generate symbol data by performing source coding operations including inter prediction or intra prediction of base layer images. For example, the video decoding apparatus 25 may generate symbol data by performing inter prediction or intra prediction, transformation, quantization on samples of data units of the base layer images, and may generate a base layer stream by performing entropy encoding on the symbol data.

Also, the video decoding apparatus 25 may perform filtering when performing video decoding.

The video decoding apparatus 25 according to an embodiment may generate enhanced filtered symbol data by filtering the symbol data generated by performing inter prediction or intra prediction.

The video decoding apparatus 25 according to another embodiment may generate an enhanced reconstructed image signal by filtering a reconstructed image signal.

During in-loop filtering, the video decoding apparatus 25 according to another embodiment may perform additional filtering other than deblocking filtering and sample adaptive offset (SAO) filtering.

Hereinafter, a decoding operation of the video decoding apparatus 25 will be described.

Operations of the motion vector determining apparatus 10 have been described above with reference to FIG. 1A.

The video decoding apparatus 25 may receive a reference index and quantized transformation coefficients of a current block, and a motion vector of a candidate block. The inverse quantizer inverse transformer 28 may reconstruct residual data of a current block by performing inverse quantization and inverse transformation on the received quantized transformation coefficients of the current block.

The motion compensator 27 may reconstruct the current block by performing motion compensation on the current block encoded via inter prediction.

The motion vector determining apparatus 10 may determine a motion vector according to blocks. The motion vector determining apparatus 10 may determine, for motion vector prediction, prediction candidates including at least one candidate motion vector for current block prediction. A candidate block may include a collocated block or a neighboring block. The motion vector determining apparatus 10 may determine one reference motion vector from among candidate motion vectors included in the prediction candidates.

The motion vector determining apparatus 10 may determine a reference motion vector by selecting an optimum candidate motion vector from among the motion vectors included in the prediction candidates, and predict and determine the motion vector of the current block by using the reference motion vector.

The block reconstructor 26 may determine a reference image of the current block, which is indicated by the reference index of the current block received by the video decoding apparatus 25. The motion vector of the current block determined by the motion vector determining apparatus 10 may determine the reference block indicated in the reference image, and the current block may be reconstructed by combining the reference block and residual data of the current block.

Accordingly, the motion compensator 27 may reconstruct blocks by performing motion compensation according to blocks, and reconstruct a current image including the reconstructed blocks. Accordingly, the video decoding apparatus 25 may reconstruct a video including an image sequence as images are reconstructed.

The video decoding apparatus 25 may further include an in-loop filtering unit that performs deblocking filtering on a current block reconstructed as blocks are reconstructed, and a reconstructed image including a the reconstructed blocks.

The video decoding apparatus 25 may receive an encoded video stream, and reconstruct a video by decoding the video stream. In this case, the video decoding apparatus 25 may extract a reference index and quantized transformation coefficients of a current block, and a motion vector of a candidate block from the video stream by parsing the received video stream. Also, the video decoding apparatus 25 may further include a receiver that receives a bitstream and performs entropy encoding on the bitstream to parse and extract a reference index and quantized transformation coefficients of a current block, and a motion vector of a candidate block from the bitstream.

Also, in order for the video encoding apparatus 20 described above with reference to FIG. 2A to generate a reconstructed image to be referenced for inter prediction of another image, the video decoding apparatus 25 may be combined to the video encoding apparatus 20. In this case, the video decoding apparatus 25 may receive a reference index and quantized transformation coefficients of a current block, and a motion vector of a candidate block, which are generated and output by the video encoding apparatus 20 via inter prediction, transformation, and quantization, and output a finally reconstructed current image through the inverse quantizer inverse transformer 28 and the motion compensator 27. The reconstructed image output by the video decoding apparatus 25 may be used as a reference image for inter prediction of another image of the video encoding apparatus 20.

The video decoding apparatus 25 according to an embodiment may operate differently based on whether a mode when data about a motion vector is received is a merge mode or AMVP.

The merge mode and AMVP have been described above with reference to FIG. 2A.

The video decoding apparatus 25 according to an embodiment may determine whether a prediction mode is a merge mode or AMVP by parsing a received bitstream.

When the prediction mode is a merge mode, the video decoding apparatus 25 according to an embodiment may obtain a merge index from the received bitstream. Then, the merge index may be parsed to determine a motion vector of a current block. Then, a current block may be reconstructed by using the determined motion vector.

A merge index according to an embodiment may denote data used by the video encoding apparatus 20 while transmitting data about a motion vector determined by using a merge mode.

When the prediction mode is AMVP, the video decoding apparatus 25 according to an embodiment may obtain at least one of a differential motion vector, reference picture distinguishing information, and a reference index from a received bitstream. Also, a motion vector of a current block may be determined by parsing obtained information. Then, a current block may be reconstructed by using the determined motion vector.

As described above, in the motion vector determining apparatus 10 according to an embodiment, blocks obtained by splitting video data are split into coding units of a tree structure, and prediction units for inter prediction of a coding unit are used. A video encoding method and apparatus, and a video decoding method and apparatus based on coding units and transformation units of a tree structure will be described later with reference to FIGS. 8 through 20.

The video decoding apparatus 25 according to an embodiment may include a central processor (not shown) that generally controls the motion vector determining apparatus 10, the block reconstructor 26, and the inverse quantizer inverse transformer 28. Alternatively, the video decoding apparatus 25 may generally operate according to interactions of the processors (not shown). Alternatively, the motion vector determining apparatus 10, the block reconstructor 26, and the inverse quantizer inverse transformer 28 may be controlled according to the control of an external processor (not shown) of the video decoding apparatus 25.

The video decoding apparatus 25 according to an embodiment may include one or more data storage units (not shown) in which input and output data of the motion vector determining apparatus 10, the block reconstructor 26, and the inverse quantizer inverse transformer 28 is stored. The video decoding apparatus 25 may include a memory control unit (not shown) that observes data input and output of the data storage units (not shown).

The video decoding apparatus 25 according to an embodiment may operate in connection with an internal video decoding processor or an external video decoding processor so as to output video decoding results, thereby performing a video decoding operation including transformation. Not only a separate processor, but also the video decoding apparatus 25, a central processor, or a graphic processor may include a video decoding processing module so that the internal video decoding processor of the video decoding apparatus 25 the internal video decoding processor of the video decoding apparatus 25 may perform basic video decoding. Hereinafter, various embodiments of filter operations that may be performed by the video decoding apparatus 25 according to an embodiment will be described with reference to FIGS. 3 to 7B.

FIG. 3 illustrates an inter-layer prediction structure 30 according to various embodiments.

Hereinafter, an inter-layer prediction structure that may be performed by the video encoding apparatus 20 according to various embodiments will be described with reference to FIG. 3.

FIG. 3 illustrates an inter-layer prediction structure according to various embodiments.

The video encoding apparatus 20 according to an embodiment may prediction-encode base view images, left view images, and right view images according to a reproduction order 30 of a multiview video prediction structure of FIG. 3.

According to the reproduction order 30 of the multiview video prediction structure according to a related technology, images of the same view are arranged in a horizontal direction. Accordingly, the left view images indicated by 'Left' are arranged in the horizontal direction in a row, the base view images indicated by 'Center' are arranged in the horizontal direction in a row, and the right view images indicated by 'Right' are arranged in the horizontal direction in a row. Compared to the left/right view images, the base view images may be central view images.

Also, images having the same POC order are arranged in a vertical direction. A POC order of images indicates a reproduction order of images forming a video. 'POC X' indicated in the multiview video prediction structure 30 indicates a relative reproduction order of images in a corresponding column, wherein a reproduction order is in front when a value of X is low, and is behind when the value of X is high.

Thus, according to the reproduction order 30 of the multiview video prediction structure according to the related technology, the left view images indicated by 'Left' are arranged in the horizontal direction according to the POC order (reproduction order), the base view images indicated by 'Center' are arranged in the horizontal direction according to the POC order (reproduction order), and the right view images indicated by 'Right' are arranged in the horizontal direction according to the POC order (reproduction order). Also, the left view image and the right view image located on the same column as the base view image have different views but the same POC order (reproduction order).

Four consecutive images form one group of pictures (GOP) according to views. Each GOP includes images between consecutive anchor pictures, and one anchor picture (key picture).

An anchor picture is a random access point, and when a reproduction location is arbitrarily selected from images arranged according to a reproduction order, i.e., a POC order, while reproducing a video, an anchor picture closest to the reproduction location according to the POC order is reproduced. The base layer images include base layer anchor pictures 31 through 35, the left view images include left view anchor pictures 131 through 135, and the right view images include right view anchor pictures 231 through 235.

Multiview images may be reproduced and predicted (reconstructed) according to a GOP order. First, according to the reproduction order 30 of the multiview video prediction structure, images included in GOP 0 may be reproduced, and then images included in GOP 1 may be reproduced, according to views. In other words, images included in each GOP may be reproduced in an order of GOP 0, GOP 1, GOP 2, and GOP 3. Also, according to a coding order of the multiview video prediction structure, the images included in GOP 1 may be predicted (reconstructed), and then the images included in GOP 1 may be predicted (reconstructed), according to views. In other words, the images included in each GOP may be predicted (reconstructed) in an order of GOP 0, GOP 1, GOP 2, and GOP 3.

According to the reproduction order 30 of the multiview video prediction structure, inter-view prediction (inter-layer prediction) and inter prediction are performed on images. In the multiview video prediction structure, an image where an arrow starts is a reference image, and an image where an arrow ends is an image predicted by using a reference image.

A prediction result of base view images may be encoded and then output in a form of a base view image stream, and a prediction result of additional view images may be encoded and then output in a form of a layer bitstream. Also, a prediction encoding result of left view images may be output as a base layer bitstream, and a prediction encoding result of right view images may be output as an enhancement layer bitstream.

Only inter prediction is performed on base view images. In other words, the base layer anchor pictures 31 through 35 of an I-picture type do not refer to other images, but remaining images of B- and b-picture types are predicted by referring to other base view images. Images of a B-picture type are predicted by referring to an anchor picture of an I-picture type, which precedes the images of a B-picture type according to a POC order, and a following anchor picture of an I-picture type. Images of a b-picture type are predicted by referring to an anchor picture of an I-type, which precedes the image of a b-picture type according a POC order, and a following image of a B-picture type, or by referring to an image of a B-picture type, which precedes the images of a b-picture type according to a POC order, and a following anchor picture of an I-picture type.

Inter-view prediction (inter-layer prediction) that references different view images, and inter prediction that references same view images are performed on each of left view images and right view images.

Inter-view prediction (inter-layer prediction) may be performed on the left view anchor pictures 131 through 135 by respectively referring to the base view anchor pictures 31 through 35 having the same POC order. Inter-view prediction may be performed on the right view anchor pictures 231 through 235 by respectively referring to the base view anchor pictures 31 through 35 or the left view anchor pictures 131 through 135 having the same POC order. Also, inter-view prediction (inter-layer prediction) may be performed on remaining images other than the left view images 131 through 135 and the right view images 231 through 235 by referring to other view images having the same POC.

Remaining images other than the anchor pictures 131 through 135 and 231 through 235 from among left view images and right view images are predicted by referring to the same view images.

However, each of the left view images and the right view images may not be predicted by referring to an anchor picture that has a preceding reproduction order from among additional view images of the same view. In other words, in order to perform inter prediction on a current left view image, left view images excluding a left view anchor picture that precedes the current left view image in a reproduction order may be referenced. Similarly, in order to perform inter prediction on a current right view image, right view images excluding a right view anchor picture that precedes the current right view image in a reproduction order may be referenced.

Also, in order to perform inter prediction on a current left view image, prediction may be performed by referring to a left view image that belongs to a current GOP but is to be reconstructed before the current left view image, instead of referring to a left view image that belongs to a GOP before the current GOP of the current left view image. The same is applied to a right view image.

The video decoding apparatus 25 according to various embodiments may reconstruct base view images, left view images, and right view images according to the reproduction order 30 of the multiview video prediction structure of FIG. 3.

Left view images may be reconstructed via inter-view disparity compensation that references base view images and inter motion compensation that references left view images. Right view images may be reconstructed via inter-view disparity compensation that references base view images and left view images, and inter motion compensation that references right view images. Reference images may be reconstructed first for disparity compensation and motion compensation of left view images and right view images.

For inter motion compensation of a left view image, left view images may be reconstructed via inter motion compensation that references a reconstructed left view reference image. For inter motion compensation of a right view image, right view images may be reconstructed via inter motion compensation that references a reconstructed right view reference image.

Also, for inter motion compensation of a current left view image, only a left view image that belongs to a current GOP of the current left view image but is to be reconstructed before the current left view image may be referenced, and a left view image that belongs to a GOP before the current GOP is not referenced. The same is applied to a right view image.

Also, the video decoding apparatus 25 according to various embodiments may not only perform disparity compensation (or inter-layer prediction compensation) to encode or decode a multiview image, but also perform motion compensation between images (or inter-layer motion prediction compensation) via inter-view motion vector prediction.

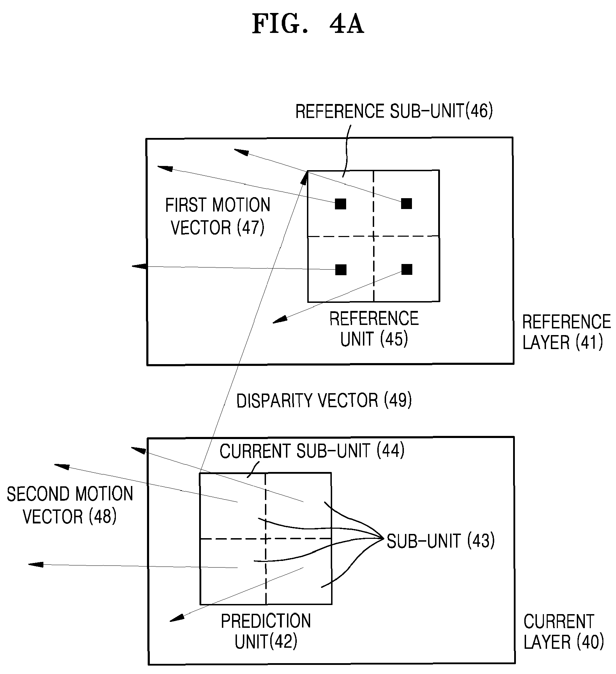

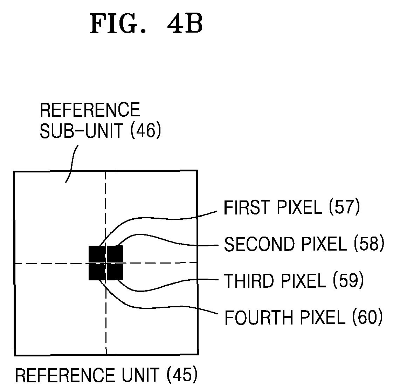

FIGS. 4A and 4B illustrate a motion vector determining method according to various embodiments.

FIG. 4A describes a method of determining a second motion vector 48 of a current sub-unit 44 belonging to a current layer.

A current layer 40 may include a prediction unit 42. The prediction unit 42 may be split into a plurality of sub-units 43.

The prediction candidate determiner 11 according to an embodiment may use a pixel included in the current sub-unit while determining a reference sub-unit corresponding to the current sub-unit.

For example, the prediction candidate determiner 11 may determine a second pixel that is a pixel in a reference unit 45 and corresponds to a first pixel that is a pixel at a certain location in the current sub-unit 44 by using a disparity vector 49. Also, a reference sub-unit 46 including the second pixel may be determined as the reference sub-unit 46 corresponding to the current sub-unit 44.

A pixel at a certain location in the current sub-unit 44 according to an embodiment may be located at the left top of the current sub-unit 44. A pixel at a certain location in the current sub-unit 44 according to another embodiment may be located at the center of the current sub-unit 44. A pixel at a certain location in the current sub-unit 44 according to another embodiment may be a pixel closest to the center of a prediction unit from among pixels of the current sub-unit 44.

The disparity vector 49 according to an embodiment may match the prediction unit 42 and the reference unit 45. Alternatively, the disparity vector 49 according to an embodiment may match the current sub-unit 44 and the reference sub-unit 46. A disparity vector according to an embodiment may be determined according to prediction units or according to the sub-units 43.

A first motion vector 47 may denote a motion vector used for inter prediction of the reference sub-unit 46. Also, the second motion vector 48 may denote a motion vector used for inter prediction of the current sub-unit 44.

The motion vector determining unit 10 according to an embodiment may determine the first motion vector 47 as the second motion vector 48 when prediction is performed in the sub-unit 43.

The motion vector determining apparatus 10 according to another embodiment may determine a sub-motion vector prediction candidate for inter prediction of the current sub-unit 44 by using the first motion vector 47.

For example, the motion vector determining apparatus 10 may use the first motion vector 47 as a candidate motion vector for determining the second motion vector 48. The motion vector determining apparatus 10 according to an embodiment may determine the first motion vector 47 as the sub-motion vector prediction candidate. Also, the sub-motion vector prediction candidate may be one of candidate motion vectors for inter prediction of the current sub-unit 44. The motion vector determining apparatus 10 may include the first motion vector 47 to prediction candidates for determining the second motion vector 48. Also, the motion vector determining apparatus 10 may select, from among motion vectors included in the prediction candidates, a motion vector used for inter prediction or inter-layer prediction of the current sub-unit 44.

The motion vector determining apparatus 10 according to an embodiment may use a block located adjacent to the reference sub-unit 46 or located in the reference sub-unit 46 while determining a motion vector of the reference sub- unit 46.

The motion vector determining apparatus 10 according to another embodiment may determine a motion vector of the reference sub-unit 46 by predicting a motion vector of a block including a pixel at a certain location in the reference sub- unit 46.

For example, the motion vector determining apparatus 10 may determine the motion vector of the reference sub-unit 46 by predicting a motion vector of a block having a pre-set size and including a pixel at the left top of the reference sub-unit 46.

As another example, the motion vector determining apparatus 10 may determine the motion vector of the reference sub-unit 46 by predicting a motion vector of a block having a pre-set size and including a pixel at the center in the reference sub-unit 46.

As another example, the motion vector determining apparatus 10 may determine the motion vector of the reference sub-unit 46 by predicting a motion vector of a block having a pre-set size and including a pixel nearest to the center of the reference unit 45 from among pixels in the reference sub-unit 46.

The motion vector determining apparatus 10 according to an embodiment may determine the second motion vector 48 as the first motion vector 47 without having to determine whether another candidate motion vector is the first motion vector 47 when inter prediction or inter-layer prediction is performed in the sub-unit 43.

FIG. 4B is a diagram for describing an embodiment of a method of determining a motion vector of the reference sub-unit 46.

According to an embodiment, the motion vector determining apparatus 10 may determine the motion vector of the reference sub-unit 46 by predicting a motion vector of a block including a pixel at a certain location in the reference sub-unit 46.

For example, the motion vector determining apparatus 10 may determine the motion vector of the reference sub-unit 46 by predicting a motion vector of a block having a pre-set size and including a pixel nearest to the center of the reference unit 45 from among pixels in the reference sub-unit 46. The pixel nearest to the center of the reference unit 45 from among the pixels in the reference sub-unit 46 may be one of a first pixel 57, a second pixel 58, a third pixel 59, and a fourth pixel 60.

According to another embodiment, when the reference unit 45 is split into four blocks, the motion vector determining apparatus 10 may determine a motion vector corresponding to a pixel included in the reference sub-unit 46 from among the first through fourth pixels 57 through 60, as the first motion vector 47. For example, when the pixel included in the reference sub-unit 46 is the first pixel 57, a motion vector corresponding to the first pixel 57 may be determined as the first motion vector 47.

According to another embodiment, when the reference unit 45 is split into four blocks, the motion vector determining apparatus 10 may determine a motion vector of a block having a pre-set size and corresponding to a pixel included in the reference sub-unit 46 from among the first through fourth pixels 57 through 60, as the first motion vector 47.

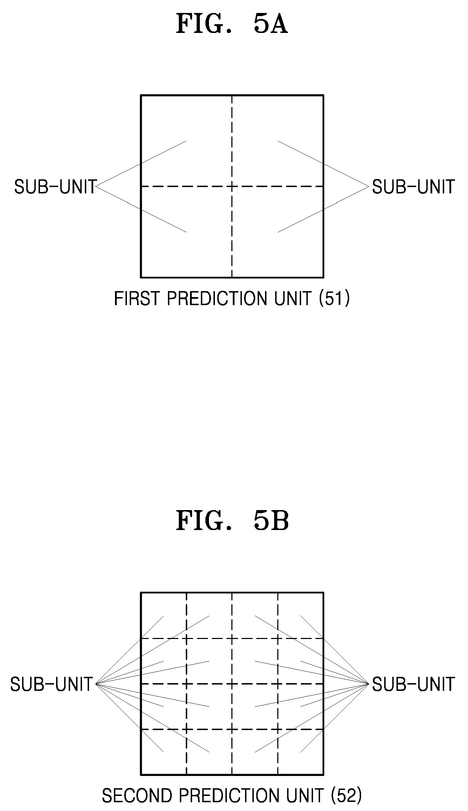

FIGS. 5A through 5F illustrate a method of splitting a prediction unit, according to various embodiments.

FIG. 5A illustrates an embodiment of the prediction candidate determiner 11 splitting a first prediction unit 51 having a square shape into four sub-units.

For example, a size of the first prediction unit 51 may be $16 \times 16$.

As another example, a size of the first prediction unit 51 may be $2N \times 2N$.

As another example, a size of the first prediction unit 51 may be equal to or larger than $16 \times 16$. When a smallest size of a sub-unit is $8 \times 8$ and a size of the first prediction unit 51 is smaller than $16 \times 16$, the first prediction unit 51 is unable to be split into four sub-units, and thus the size of the first prediction unit 51 may be equal to or larger than $16 \times 16$.

FIG. 5B illustrates an embodiment of the prediction candidate determiner 11 splitting a second prediction unit 52 having a square shape into 16 sub-units.

For example, a size of the second prediction unit 52 may be $64 \times 64$.

As another example, a size of the second prediction unit 52 may be $2N \times 2N$.

As another example, a size of the second prediction unit 52 may be equal to or larger than $32 \times 32$. When a smallest size of a sub-unit is $8 \times 8$ and a size of the second prediction unit 52 is smaller than $32 \times 32$, the second prediction unit 52 is unable to be split into 16 sub-units, and thus the size of the second prediction unit 52 may be equal to or larger than $32 \times 32$.

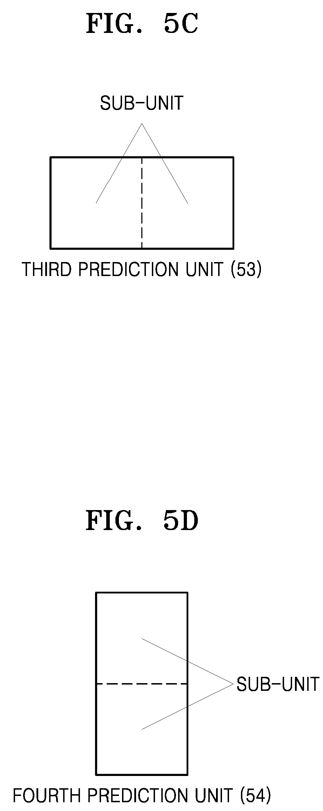

FIG. 5C illustrates an embodiment of the prediction candidate determiner 11 splitting a third prediction unit 53 having a rectangular shape into two sub-units.

For example, a size of the third prediction unit 53 may be $64 \times 32$.

As another example, a size of the third prediction unit 53 may be $2N \times N$.

As another example, a size of the third prediction unit 53 may be equal to or larger than $16 \times 8$. When a smallest size of a sub-unit is $8 \times 8$ and the size of the third prediction unit 53 is smaller than $16 \times 8$, the third prediction unit 53 is unable to be split into two sub-units, and thus the size of the third prediction unit 53 may be equal to or larger than $16 \times 8$.

FIG. 5D illustrates an embodiment of the prediction candidate determiner 11 splitting a fourth prediction unit 54 having a rectangular shape into two sub-units.

For example, a size of the fourth prediction unit 54 may be $32 \times 64$.

As another example, a size of the fourth prediction unit 54 may be $N \times 2N$.

As another example, a size of the fourth prediction unit 54 may be equal to or larger than $8 \times 16$. When a smallest size of a sub-unit is $8 \times 8$ and a size of the fourth prediction unit 54 is smaller than $8 \times 16$, the fourth prediction unit 54 is unable to be split into two sub-units, and thus the size of the fourth prediction unit 54 may be equal to or larger than $8 \times 16$.

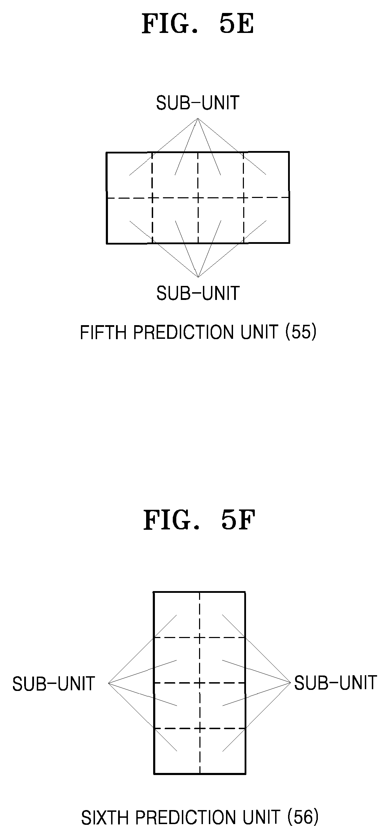

FIG. 5E illustrates an example of the prediction candidate determiner 11 splitting a fifth prediction unit 55 having a rectangular shape into 8 sub-units.

For example, a size of the fifth prediction unit 55 may be $32 \times 16$.

As another example, a size of the fifth prediction unit 55 may be $2N \times N$.

As another example, a size of the fifth prediction unit 55 may be equal to or larger than $32 \times 16$. When a smallest size of a sub-unit is $8 \times 8$ and a size of the fifth prediction unit 55 is smaller than $32 \times 16$, the fifth prediction unit 55 is unable to be split into 8 sub-units, and thus the size of the fifth prediction unit 55 may be equal to or larger than $32 \times 16$.

FIG. 5F illustrates an example of the prediction candidate determiner 11 splitting a sixth prediction unit 56 having a rectangular shape into 8 sub-units.

For example, a size of the sixth prediction unit 56 may be $32 \times 64$.

As another example, a size of the sixth prediction unit 56 may be $N \times 2N$.

As another example, a size of the sixth prediction unit 56 may be equal to or larger than $16 \times 32$. When a smallest size of a sub-unit is $8 \times 8$ and a size of the sixth prediction unit 56 is smaller than $16 \times 32$, the sixth prediction unit 56 is unable to be split into 8 sub-units, and thus the size of the sixth prediction unit 56 may be equal to or larger than $16 \times 32$.

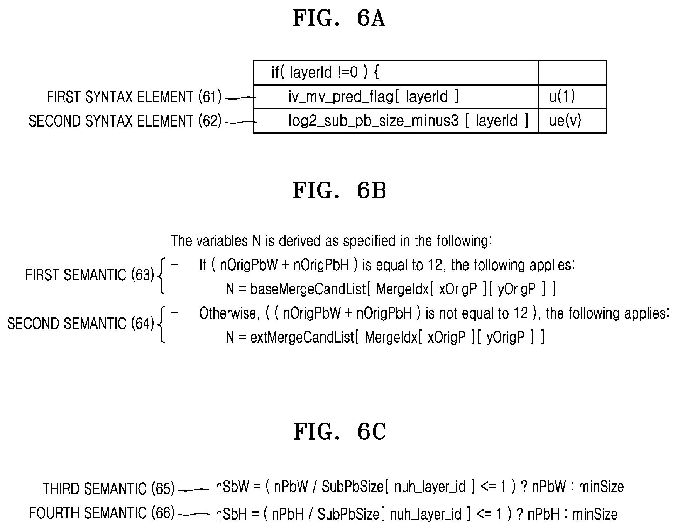

FIGS. 6A through 6C illustrate syntaxes or semantics with respect to a motion vector determining method, according to various embodiments.

FIG. 6A is a diagram for describing syntax elements regarding a smallest size of a sub-unit in relation to a method of determining a motion vector of a sub-unit.

A first syntax element 61 indicates that, when an ID of a current layer is not 0, a flag related to inter-layer motion vector prediction corresponding to the ID of the current layer is parsed.

A second syntax element 62 indicates that a size of a sub-unit is parsed when a prediction unit is split into sub-units. When a size of a sub-unit is sub_pb_size, a value of "$\log_2(\text{sub\_pb\_size})-3$" is signaled. In order for a condition in which the signaled value is equal to or larger than 0 to be satisfied, the size of the sub-unit may be equal to or larger than 8. Accordingly, a smallest size of the sub-unit may be $8 \times 8$.

FIG. 6B is a diagram for describing semantics regarding a method of determining whether prediction is performed in a sub-unit.

While determining a variable N, a merge candidate list may be used.

For example, as indicated by a first semantic 63, when a sum of a width and a height of a prediction unit is 12, a merge candidate list used in HEVC may be used while determining a variable N. However, as indicated by a second semantic 64, when a sum of a width and a height of a prediction unit is not 12, a merge candidate list obtained by expanding a merge candidate list used in HEVC may be used while determining a variable N.

When a merge candidate list obtained by expanding a merge candidate list used in HEVC is used to perform inter prediction according to an embodiment, an operation of splitting a prediction unit into a plurality of sub-units may be performed.

Accordingly, whether prediction is performed in sub-units while inter prediction according to an embodiment is performed may be determined based on a sum of a width and a height of a prediction unit.

For example, when a sum of a width and a height of a prediction unit is 12, inter prediction is performed in the prediction unit, but inter prediction may not be performed in a sub-unit. As another example, when a size of a prediction unit is $8\times4$ or $4\times8$, inter prediction is performed in the prediction unit, but inter prediction may not be performed in a sub-unit.

As another example, when a sum of a width and a height of a prediction unit is not equal to 12, inter prediction may be performed according to sub-units. As another example, when a size of a prediction unit is $16\times8$, inter prediction may be performed according to sub-units.

FIG. 6C illustrates semantics related to a method of determining a size of a unit on which inter prediction or inter-layer prediction is performed by comparing a pre-set size of a sub-unit and a size of a prediction unit.

In FIG. 6C, nSbW may denote a width of a sub-unit, nPbW may denote a width of a prediction unit currently encoded or decoded, nSbH may denote a height of a sub-unit, nPbH may denote a height of a prediction unit currently encoded or decoded, SubPbSize may denote a pre-set size of a sub-unit, and minSize may denote a smallest sub-unit size.

The motion vector determining apparatus 10 according to an embodiment may determine a size of a sub-unit by comparing a size of a prediction unit currently encoded or decoded and a pre-set size of a sub-unit.

For example, as indicated by a third semantic 65, the motion vector determining apparatus 10 may determine a width of a sub-unit to be the same as a width of a prediction unit, when a width of a prediction unit currently encoded or decoded is smaller than or equal to a width of a pre-set sub unit.

As another example, as indicated by the third semantic 65, the motion vector determining apparatus 10 may determine a width of a sub-unit to be a pre-determined smallest size when a width of a prediction unit currently encoded or decoded is larger than a width of a pre-set sub-unit.

As another example, as indicated by a fourth semantic 66, the motion vector determining apparatus 10 may determine a height of a sub-unit to be the same as a height of a prediction unit when a height of a prediction unit currently encoded or decoded is smaller than or equal to a height of a pre-set sub-unit.

As another example, as indicated by the fourth semantic 66, the motion vector determining apparatus 10 may determine a height of a sub-unit to be a pre-determined smallest size when a height of a prediction unit currently encoded or decoded is larger than a height of a pre-set sub-unit.

FIG. 7A is a diagram for describing a motion vector determining method in relation to an intra prediction region of a reference unit, according to an embodiment.

A prediction unit 72 included in a current layer 70 may be split into sub-units 73.

The prediction unit 72 may correspond to a reference unit 75 included in a reference layer 71. For example, the motion vector determining apparatus 10 may match the prediction unit 72 to the reference unit 75 by using a first disparity vector 77.

The first disparity vector 77 and a second disparity vector 78 may be related to each other. For example, the first disparity vector 77 used while determining the reference unit 75 corresponding to the prediction unit 72 may be the same as the second disparity vector 78 used while determining a second reference sub-unit 79 corresponding to a current sub-unit 74. As another example, the motion vector determining apparatus 10 may determine the second disparity vector 78 by using the first disparity vector 77.

An encoding mode of the second reference sub-unit 79 included in the reference layer 71, which corresponds to the current sub-unit 74 included in the current layer 70, may be an intra mode.

When the second reference sub-unit 79 is encoded in an intra mode, there may be no motion vector corresponding to the second reference sub-unit 79.

Accordingly, when the encoding mode of the second reference sub-unit 79 corresponding to the current sub-unit 74 is an intra mode, the motion vector determining apparatus 10 may determine the second disparity vector 78 as a motion vector used for prediction of the current sub-unit 74. For example, when an encoding mode of the second reference sub-unit 79 is an intra mode, the video decoding apparatus 25 may decode the current sub-unit 74 by performing inter-layer prediction by using the second disparity vector 78. When the video decoding apparatus 25 according to an embodiment performed inter-layer prediction by using the second disparity vector 78, a pixel value of the current sub-unit 74 may be the same as a pixel value of the second reference sub-unit 79.

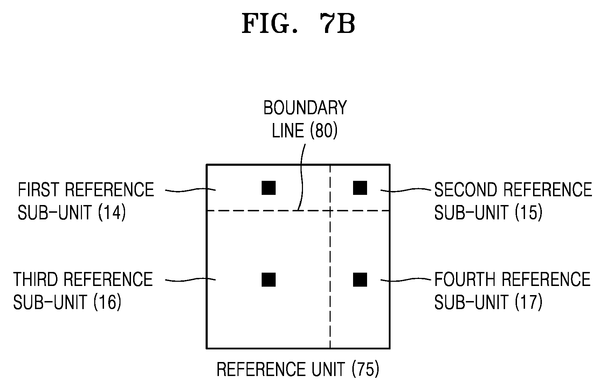

FIG. 7B is a diagram for describing a method of splitting a reference block, according to an embodiment.

The reference unit 75 may be located on a certain boundary line in an image of the reference layer 71. Accordingly, the motion vector determining apparatus 10 may consider a certain boundary line while splitting the reference unit 75 into a plurality of blocks.

A certain boundary line according to an embodiment considered while the motion vector determining apparatus 10 splits the reference unit 75 into a plurality of blocks may be formed by coding units. The motion vector determining apparatus 10 may split the reference unit 75 into a plurality of blocks by considering a boundary line dividing coding units for encoding of a reference image.

For example, the motion vector determining apparatus 10 may adjust sizes of first reference sub-unit 14 through fourth reference sub-unit 17 such that the reference unit 75 is split into a plurality of blocks according to a boundary line 80 formed by coding units.

A method of determining a reference sub-unit by using a pixel has been described above with reference to FIG. 4.

Also, a method of determining a motion vector after a reference sub-unit is determined has been described above with reference to FIGS. 1 through 2B.

FIG. 8 is a block diagram of a video encoding apparatus 100 based on coding units according to a tree structure, according to one or more embodiments.

The video encoding apparatus 100 involving video prediction based on coding units according to a tree structure includes a coding unit determiner 120, and an outputter 130.

The coding unit determiner 120 may split a current picture based on a LCU that is a coding unit having a maximum size for a current picture of an image. If the current picture is larger than the LCU, image data of the current picture may be split into the at least one LCU. The LCU according to one or more embodiments may be a data unit having a size of 32×32, 64×64, 128×128, 256×256, etc., wherein a shape of the data unit is a square having a width and length in squares of 2.

A coding unit according to one or more embodiments may be characterized by a maximum size and a depth. The depth denotes the number of times the coding unit is spatially split from the LCU, and as the depth deepens, deeper coding units according to depths may be split from the LCU to a smallest coding unit (SCU). A depth of the LCU is an uppermost depth and a depth of the SCU is a lowermost depth. Since a size of a coding unit corresponding to each depth decreases as the depth of the LCU deepens, a coding unit corresponding to an upper depth may include a plurality of coding units corresponding to lower depths.

As described above, the image data of the current picture is split into the LCUs according to a maximum size of the coding unit, and each of the LCUs may include deeper coding units that are split according to depths. Since the LCU according to one or more embodiments is split according to depths, the image data of the space domain included in the LCU may be hierarchically classified according to depths.

A maximum depth and a maximum size of a coding unit, which limit the total number of times a height and a width of the LCU are hierarchically split, may be predetermined.

The coding unit determiner 120 encodes at least one split region obtained by splitting a region of the LCU according to depths, and determines a depth to output a finally encoded image data according to the at least one split region. In other words, the coding unit determiner 120 determines a depth by encoding the image data in the deeper coding units according to depths, according to the LCU of the current picture, and selecting a depth having the least encoding error. The determined depth and the encoded image data according to the determined depth are output to the outputter 130.

The image data in the LCU is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one depth may be selected for each LCU.

The size of the LCU is split as a coding unit is hierarchically split according to depths, and as the number of coding units increases. Also, even if coding units correspond to the same depth in one LCU, it is determined whether to split each of the coding units corresponding to the same depth to a lower depth by measuring an encoding error of the image data of the each coding unit, separately. Accordingly, even when image data is included in one LCU, the encoding errors may differ according to regions in the one LCU, and thus the depths may differ according to regions in the image data. Thus, one or more depths may be determined in one LCU, and the image data of the LCU may be divided according to coding units of at least one depth.

Accordingly, the coding unit determiner 120 may determine coding units having a tree structure included in the LCU. The 'coding units having a tree structure' according to one or more embodiments include coding units corresponding to a depth determined to be the depth, from among all deeper coding units included in the LCU. A coding unit of a depth may be hierarchically determined according to depths in the same region of the LCU, and may be independently determined in different regions. Similarly, a depth in a current region may be independently determined from a depth in another region.

A maximum depth according to one or more embodiments is an index related to the number of splitting times from a LCU to an SCU. A first maximum depth according to one or more embodiments may denote the total number of splitting times from the LCU to the SCU. A second maximum depth according to one or more embodiments may denote the total number of depth levels from the LCU to the SCU. For example, when a depth of the LCU is 0, a depth of a coding unit, in which the LCU is split once, may be set to 1, and a depth of a coding unit, in which the LCU is split twice, may be set to 2. Here, if the SCU is a coding unit in which the LCU is split four times, 5 depth levels of depths 0, 1, 2, 3, and 4 exist, and thus the first maximum depth may be set to 4, and the second maximum depth may be set to 5.

Prediction encoding and transformation may be performed according to the LCU. The prediction encoding and the transformation are also performed based on the deeper coding units according to a depth equal to or depths less than the maximum depth, according to the LCU.

Since the number of deeper coding units increases whenever the LCU is split according to depths, encoding, including the prediction encoding and the transformation, is performed on all of the deeper coding units generated as the depth deepens. For convenience of description, the prediction encoding and the transformation will now be described based on a coding unit of a current depth, in a LCU.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the LCU, the prediction encoding may be performed based on a coding unit corresponding to a depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2N×2N (where N is a positive integer) is no longer split and becomes a prediction unit of 2N×2N, and a size of a partition may be 2N×2N, 2N×N, N×2N, or N×N. Examples of a partition mode include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2N×2N, 2N×N, N×2N, or N×N. Also, the skip mode may be performed only on the partition of 2N×2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residual image data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2N×2N, a transformation depth may be 0 when the size of a transformation unit is 2N×2N, may be 1 when the size of the transformation unit is N×N, and may be 2 when the size of the transformation unit is N/2×N/2. In other words, the transformation unit having the tree structure may be set according to the transformation depths.

Encoding information according to coding units corresponding to a depth requires not only information about the depth, but also about information related to prediction encoding and transformation. Accordingly, the coding unit determiner 120 not only determines a depth having a least encoding error, but also determines a partition mode in a prediction unit, a prediction mode according to prediction units, and a size of a transformation unit for transformation.

Coding units according to a tree structure in a LCU and methods of determining a prediction unit/partition, and a transformation unit, according to one or more embodiments, will be described in detail below with reference to FIGS. 7 through 19.

The coding unit determiner 120 may measure an encoding error of deeper coding units according to depths by using Rate-Distortion Optimization based on Lagrangian multipliers.

The outputter 130 outputs the image data of the LCU, which is encoded based on the at least one depth determined by the coding unit determiner 120, and information about the encoding mode according to the depth, in bitstreams.

The encoded image data may be obtained by encoding residual image data of an image.

The information about the encoding mode according to depth may include information about the depth, about the partition mode in the prediction unit, the prediction mode, and the size of the transformation unit.

The information about the depth may be defined by using splitting information according to depths, which indicates whether encoding is performed on coding units of a lower depth instead of a current depth. If the current depth of the current coding unit is the depth, image data in the current coding unit is encoded and output, and thus the splitting information may be defined not to split the current coding unit to a lower depth. Alternatively, if the current depth of the current coding unit is not the depth, the encoding is performed on the coding unit of the lower depth, and thus the splitting information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one LCU, and information about at least one encoding mode is determined for a coding unit of a depth, information about at least one encoding mode may be determined for one LCU. Also, a depth of the image data of the LCU may be different according to locations since the image data is hierarchically split according to depths, and thus splitting information may be set for the image data.

Accordingly, the outputter 130 may assign corresponding splitting information to at least one selected from the coding unit, the prediction unit, and a minimum unit included in the LCU.

The minimum unit according to one or more embodiments is a square data unit obtained by splitting the SCU constituting the lowermost depth by 4. Alternatively, the minimum unit according to an embodiment may be a maximum square data unit that may be included in all of the coding units, prediction units, partition units, and transformation units included in the LCU.

For example, the encoding information output by the outputter 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The outputter 130 may encode and output SAO parameters related to the SAO operation described above with reference to FIGS. 1A through 14.

In the video encoding apparatus 100, the deeper coding unit may be a coding unit obtained by dividing a height or width of a coding unit of an upper depth, which is one layer above, by two. In other words, when the size of the coding unit of the current depth is 2N×2N, the size of the coding unit of the lower depth is N×N. Also, the coding unit with the current depth having a size of 2N×2N may include a maximum of 4 of the coding units with the lower depth.

Accordingly, the video encoding apparatus 100 may form the coding units having the tree structure by determining coding units having an optimum shape and an optimum size for each LCU, based on the size of the LCU and the maximum depth determined considering characteristics of the current picture. Also, since encoding may be performed on each LCU by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 20 described with reference to FIG. 2A may include as many video encoding apparatuses 100 as the number of layers in order to encode single-layer images for respective layers of a multi-layer video.

When the video encoding apparatus 100 encodes first layer images, the coding determiner 120 may determine a prediction unit for inter prediction for each respective coding unit according to a tree structure for each largest coding unit and may perform inter prediction for each respective prediction unit.

When the video encoding apparatus 100 encodes second layer images, the coding determiner 120 may also determine a prediction unit and a coding unit according to a tree structure for each largest coding unit and may perform inter prediction for each respective prediction unit.

The video encoding apparatus 100 may encode a brightness difference between first and second layer images for compensating for the brightness difference. However, whether to perform brightness compensation may be determined according to an encoding mode of a coding unit. For example, the brightness compensation may be performed only on a prediction unit of 2Nx2N.

FIG. 9 is a block diagram of a video decoding apparatus 200 based on coding units having a tree structure, according to one or more embodiments.

The video decoding apparatus 200 that involves video prediction based on coding units having a tree structure includes a receiver 210, an image data and encoding information extractor 220, and an image data decoder 230.

Definitions of various terms, such as a coding unit, a depth, a prediction unit, a transformation unit, and information about various encoding modes, for decoding operations of the video decoding apparatus 200 are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each LCU, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts splitting information and encoding information for the coding units having a tree structure according to each LCU, from the parsed bitstream. The extracted splitting information and encoding information are output to the image data decoder 230. In other words, the image data in a bit stream is split into the LCU so that the image data decoder 230 decodes the image data for each LCU.

The splitting information and encoding information according to the LCU may be set for at least one piece of splitting information corresponding to the depth, and encoding information according to the depth may include information about a partition mode of a corresponding coding unit corresponding to the depth, information about a prediction mode, and splitting information of a transformation unit. Also, splitting information according to depths may be extracted as the information about a final depth.

The splitting information and the encoding information according to each LCU extracted by the image data and encoding information extractor 220 is splitting information and encoding information determined to generate a minimum encoding error when an encoder, such as the video encoding apparatus 100, repeatedly performs encoding for each deeper coding unit according to depths according to each LCU. Accordingly, the video decoding apparatus 200 may reconstruct an image by decoding the image data according to a depth and an encoding mode that generates the minimum encoding error.

Since the splitting information and the encoding information may be assigned to a predetermined data unit from among a corresponding coding unit, a prediction unit, and a minimum unit, the image data and encoding information extractor 220 may extract the splitting information and the encoding information according to the predetermined data units. If splitting information and encoding information of a corresponding LCU are recorded according to predetermined data units, the predetermined data units to which the same splitting information and encoding information are assigned may be inferred to be the data units included in the same LCU.

The image data decoder 230 reconstructs the current picture by decoding the image data in each LCU based on the splitting information and the encoding information according to the LCUs. In other words, the image data decoder 230 may decode the encoded image data based on the extracted information about the partition mode, the prediction mode, and the transformation unit for each coding unit from among the coding units having the tree structure included in each LCU. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each LCU. Via the inverse transformation, a pixel value of the space domain of the coding unit may be reconstructed.

The image data decoder 230 may determine a final depth of a current LCU by using splitting information according to depths. If the splitting information indicates that image data is no longer split in the current depth, the current depth is the final depth. Accordingly, the image data decoder 230 may decode encoded data in the current LCU by using the information about the partition mode of the prediction unit, the information about the prediction mode, and the splitting information of the transformation unit for each coding unit corresponding to the depth.

In other words, data units containing the encoding information including the same splitting information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The video decoding apparatus 25 described with reference to FIG. 2B may include as many video decoding apparatuses 200 as the number of views in order to decode the received first layer image stream and second layer image stream to reconstruct first layer images and second layer images.

When a first layer image stream is received, the image data decoder 230 of the video decoding apparatus 200 may split samples of first layer images that are extracted from the first layer image stream by the extractor 220 into coding units according to a tree structure of a largest coding unit. The image data decoder 230 may perform motion compensation on respective prediction units for inter prediction for each respective coding unit according to a tree structure of the samples of the first layer images, to reconstruct the first layer images.

When a second layer image stream is received, the image data decoder 230 of the video decoding apparatus 200 may split samples of second layer images that are extracted from the second layer image stream by the extractor 220 into coding units according to a tree structure of a largest coding unit. The image data decoder 230 may perform motion compensation on respective prediction units for inter prediction of the samples of the second layer images to reconstruct the second layer images.

The extractor 220 may obtain information relating to a brightness order between first and second layer images from a bitstream in order to compensate for the brightness difference. However, whether to perform brightness compensation may be determined according to an encoding mode of a coding unit. For example, the brightness compensation may be performed only on a prediction unit of 2Nx2N.

The video decoding apparatus 200 may obtain information about at least one coding unit that generates the minimum encoding error when encoding is recursively performed for each largest coding unit, and may use the information to decode the current picture. In other words, the coding units having the tree structure determined to be the optimum coding units in each largest coding unit may be decoded. Also, the maximum size of a coding unit is determined considering a resolution and an amount of image data.

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder.

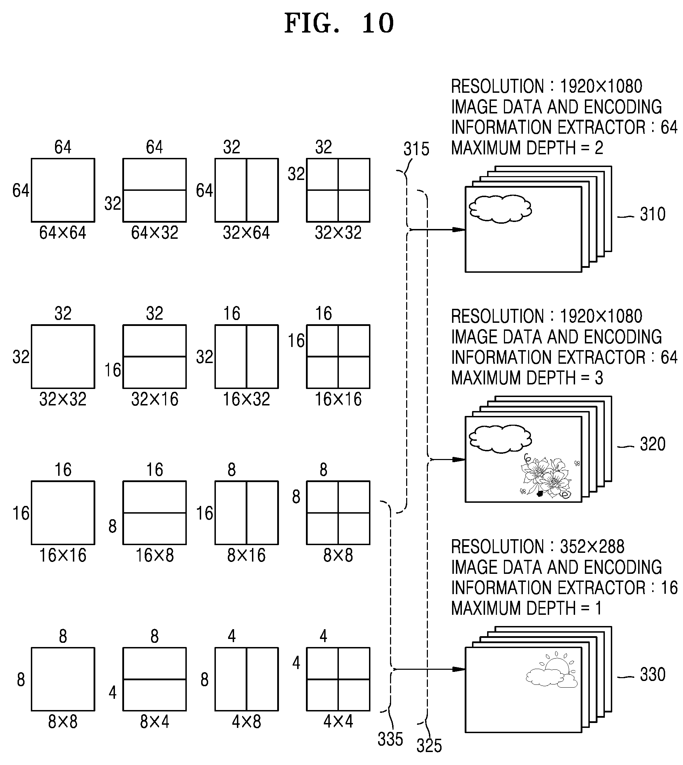

FIG. 10 is a diagram for describing a concept of coding units according to various embodiments.

A size of a coding unit may be expressed by width × height, and may be 64×64, 32×32, 16×16, and 8×8. A coding unit of 64×64 may be split into partitions of 64×64, 64×32, 32×64, or 32×32, and a coding unit of 32×32 may be split into partitions of 32×32, 32×16, 16×32, or 16×16, a coding unit of 16×16 may be split into partitions of 16×16, 16×8, 8×16, or 8×8, and a coding unit of 8×8 may be split into partitions of 8×8, 8×4, 4×8, or 4×4.

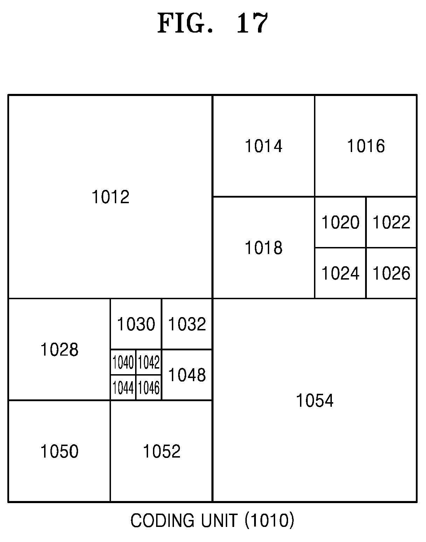

In video data 310, a resolution is 1920×1080, a maximum size of a coding unit is 64, and a maximum depth is 2. In video data 320, a resolution is 1920×1080, a maximum size of a coding unit is 64, and a maximum depth is 3. In video data 330, a resolution is 352×288, a maximum size of a coding unit is 16, and a maximum depth is 1. The maximum depth shown in FIG. 17 denotes a total number of splits from a LCU to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a LCU having a long axis size of 64, and coding units having long axis sizes of 32 and 16 since depths are deepened to two layers by splitting the LCU twice. Since the maximum depth of the video data 330 is 1, coding units 335 of the video data 330 may include a LCU having a long axis size of 16, and coding units having a long axis size of 8 since depths are deepened to one layer by splitting the LCU once.

Since the maximum depth of the video data 320 is 3, coding units 325 of the video data 320 may include a LCU having a long axis size of 64, and coding units having long axis sizes of 32, 16, and 8 since the depths are deepened to 3 layers by splitting the LCU three times. As a depth deepens, detailed information may be precisely expressed.

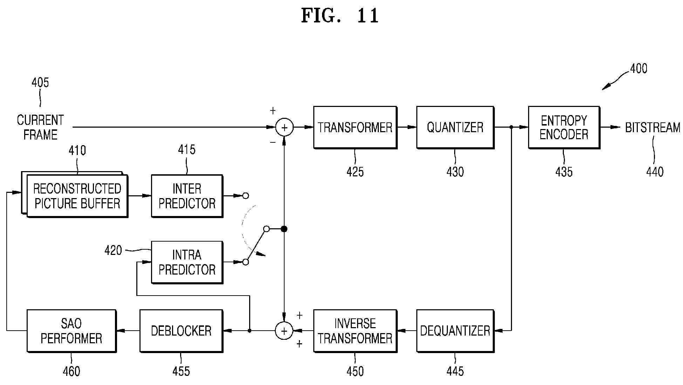

FIG. 11 is a block diagram of an image encoder 400 based on coding units, according to one or more embodiments.

The image encoder 400 performs operations necessary for encoding image data in the coding unit determiner 120 of the video encoding apparatus 100. In other words, an intra predictor 420 performs intra prediction on coding units in an intra mode according to prediction units, from among a current frame 405, and an inter predictor 415 performs inter prediction on coding units in an inter mode by using a current image 405 and a reference image obtained from a reconstructed picture buffer 410 according to prediction units. The current image 405 may be split into LCUs and then the LCUs may be sequentially encoded. In this regard, the LCUs that are to be split into coding units having a tree structure may be encoded.

Residual image data is generated by removing prediction data regarding coding units of each mode that is output from the intra predictor 420 or the inter predictor 415 from data regarding encoded coding units of the current image 405, and is output as a quantized transformation coefficient according to transformation units through a transformer 425 and a quantizer 430. The quantized transformation coefficient is reconstructed as the residual image data in a space domain through a dequantizer 445 and an inverse transformer 450. The reconstructed residual image data in the space domain is added to prediction data for coding units of each mode that is output from the intra predictor 420 or the inter predictor and thus is reconstructed as data in a space domain for coding units of the current image 405. The reconstructed data in the space domain is generated as reconstructed images through a de-blocker 455 and an SAO performer 460 and the reconstructed images are stored in the reconstructed picture buffer 410. The reconstructed images stored in the reconstructed picture buffer 410 may be used as reference images for inter prediction of another image. The transformation coefficient quantized by the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the dequantizer 445, the inverse transformer 450, the de-blocker 455, and the SAO performer 460, perform operations based on each coding unit among coding units having a tree structure according to each LCU.

In particular, the intra predictor 410, the motion estimator 420, and the motion compensator 425 determines partitions and a prediction mode of each coding unit from among the coding units having a tree structure while considering the maximum size and the maximum depth of a current LCU, and the transformer 430 determines the size of the transformation unit in each coding unit from among the coding units having a tree structure.

Specifically, the intra predictor 420 and the inter predictor 415 may determine a partition mode and a prediction mode of each coding unit among the coding units having a tree structure in consideration of a maximum size and a maximum depth of a current LCU, and the transformer 425 may determine whether to split a transformation unit having a quad tree structure in each coding unit among the coding units having a tree structure.

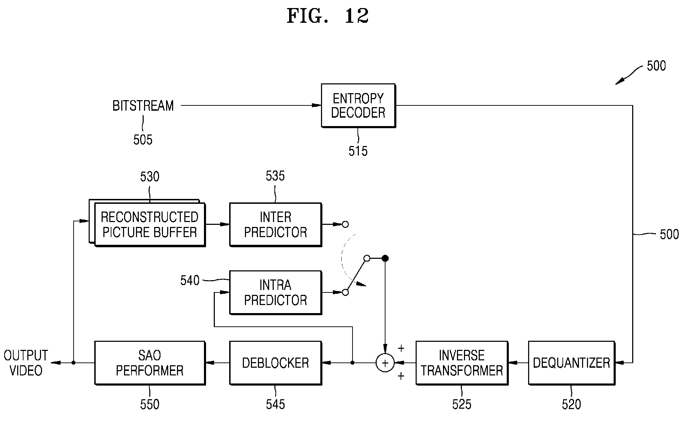

FIG. 12 is a block diagram of an image decoder 500 based on coding units, according to one or more embodiments.

An entropy decoder 515 parses encoded image data to be decoded and information about encoding required for decoding from a bitstream 505. The encoded image data is a quantized transformation coefficient from which residual image data is reconstructed by a dequantizer 520 and an inverse transformer 525.

An intra predictor 540 performs intra prediction on coding units in an intra mode according to each prediction unit. An inter predictor 535 performs inter prediction on coding units in an inter mode from among the current image 405 for each prediction unit by using a reference image obtained from a reconstructed picture buffer 530.

Prediction data and residual image data regarding coding units of each mode, which passed through the intra predictor 540 and the inter predictor 535, are summed, and thus data in a space domain regarding coding units of the current image 405 may be reconstructed, and the reconstructed data in the space domain may be output as a reconstructed image 560 through a de-blocker 545 and an SAO performer 550. Reconstructed images stored in the reconstructed picture buffer 530 may be output as reference images.

In order to decode the image data in the image data decoder 230 of the video decoding apparatus 200, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the dequantizer 520, the inverse transformer 525, the inter predictor 535, the de-blocker 545, and the SAO performer 550 may perform operations based on coding units having a tree structure for each LCU.

In particular, the SAO performer 550 and the inter predictor 535 may determine a partition and a prediction mode for each of the coding units having a tree structure, and the inverse transformer 525 may determine whether to split a transformation unit having a quad tree structure for each of the coding units.

The encoding operation of FIG. 10 and the encoding operation of FIG. 11 describe video stream encoding and decoding operations in a single layer, respectively. Thus, if the video encoding apparatus 20 of FIG. 2A encodes video streams of two or more layers, the image encoder 400 may be provided for each layer. Similarly, if the video decoding apparatus 25 of FIG. 2B decodes video streams of two or more layers, the image decoder 500 may be provided for each layer.

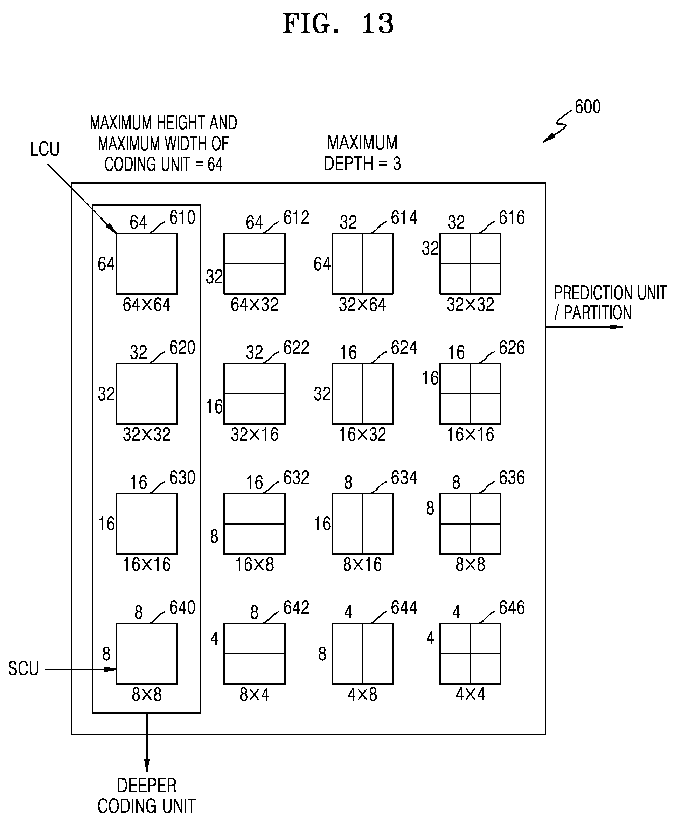

FIG. 13 is a diagram illustrating deeper coding units according to depths, and partitions, according to one or more embodiments.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to one or more embodiments, the maximum height and the maximum width of the coding units are each 64, and the maximum depth is 3. In this case, the maximum depth refers to a total number of times the coding unit is split from the LCU to the SCU. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a LCU in the hierarchical structure 600, wherein a depth is 0 and a size, i.e., a height by width, is 64×64. The depth deepens along the vertical axis, and a coding unit 620 having a size of 32×32 and a depth of 1, a coding unit 630 having a size of 16×16 and a depth of 2, and a coding unit 640 having a size of 8×8 and a depth of 3. The coding unit 640 having a size of 8×8 and a depth of 3 is an SCU.

The prediction unit and the partitions of a coding unit are arranged along the horizontal axis according to each depth. In other words, if the coding unit 610 having a size of 64×64 and a depth of 0 is a prediction unit, the prediction unit may be split into partitions include in the coding unit 610, i.e. a partition 610 having a size of 64×64, partitions 612 having the size of 64×32, partitions 614 having the size of 32×64, or partitions 616 having the size of 32×32.

Similarly, a prediction unit of the coding unit 620 having the size of 32×32 and the depth of 1 may be split into partitions included in the coding unit 620, i.e. a partition 620 having a size of 32×32, partitions 622 having a size of 32×16, partitions 624 having a size of 16×32, and partitions 626 having a size of 16×16.

Similarly, a prediction unit of the coding unit 630 having the size of 16×16 and the depth of 2 may be split into partitions included in the coding unit 630, i.e. a partition having a size of 16×16 included in the coding unit 630, partitions 632 having a size of 16×8, partitions 634 having a size of 8×16, and partitions 636 having a size of 8×8.

Similarly, a prediction unit of the coding unit 640 having the size of 8×8 and the depth of 3 may be split into partitions included in the coding unit 640, i.e. a partition having a size of 8×8 included in the coding unit 640, partitions 642 having a size of 8×4, partitions 644 having a size of 4×8, and partitions 646 having a size of 4×4.

In order to determine a final depth of the coding units constituting the LCU 610, the coding unit determiner 120 of the video encoding apparatus 100 performs encoding for coding units corresponding to each depth included in the LCU 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the final depth and a partition mode of the coding unit 610.

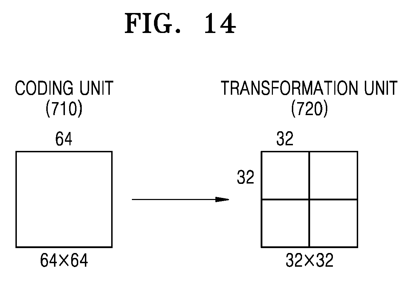

FIG. 14 is a diagram for describing a relationship between a coding unit 710 and transformation units 720, according to one or more embodiments.

The video encoding apparatus 100 or the video decoding apparatus 200 encodes or decodes an image according to coding units having sizes smaller than or equal to a LCU for each LCU. Sizes of transformation units for transformation during encoding may be selected based on data units that are not larger than a corresponding coding unit.

For example, in the video encoding apparatus 100 or the video decoding apparatus 200, if a size of the coding unit 710 is 64×64, transformation may be performed by using the transformation units 720 having a size of 32×32.

Also, data of the coding unit 710 having the size of 64×64 may be encoded by performing the transformation on each of the transformation units having the size of 32×32, 16×16, 8×8, and 4×4, which are smaller than 64×64, and then a transformation unit having the least coding error may be selected.

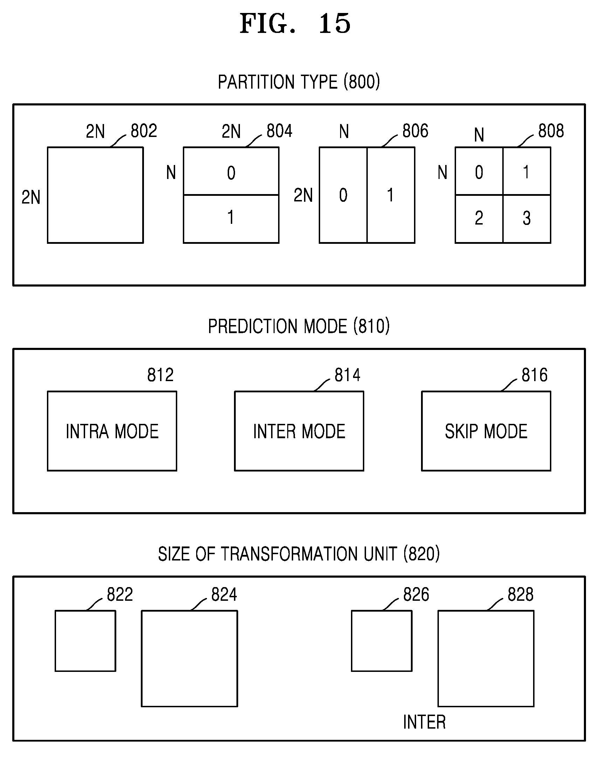

FIG. 15 is a diagram fro describing encoding information of coding units corresponding to a depth, according to one or more embodiments.

The outputter 130 of the video encoding apparatus 100 may encode and transmit information 800 about a partition mode, information 810 about a prediction mode, and information 820 about a size of a transformation unit for each coding unit corresponding to a final depth, as information about an encoding mode.

The information 800 indicates information about a mode of a partition obtained by splitting a prediction unit of a current coding unit, wherein the partition is a data unit for prediction encoding the current coding unit. For example, a current coding unit CU_0 having a size of 2N×2N may be split into any one of a partition 802 having a size of 2N×2N, a partition 804 having a size of 2N×N, a partition 806 having a size of N×2N, and a partition 808 having a size of N×N. Here, the information 800 about the partition mode is set to indicate one of the partition 804 having a size of 2N×N, the partition 806 having a size of N×2N, and the partition 808 having a size of N×N.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

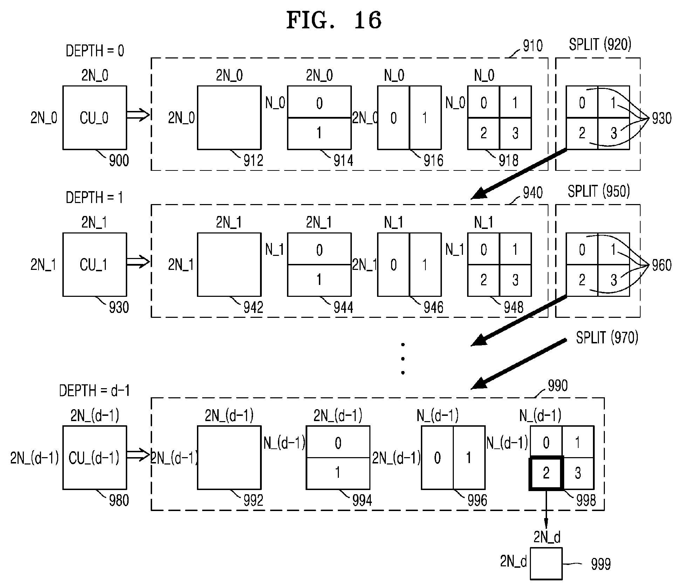

FIG. 16 is a diagram of deeper coding units according to depths, according to one or more embodiments.

Splitting information may be used to indicate a change of a depth. The spilt information indicates whether a coding unit of a current depth is split into coding units of a lower depth.

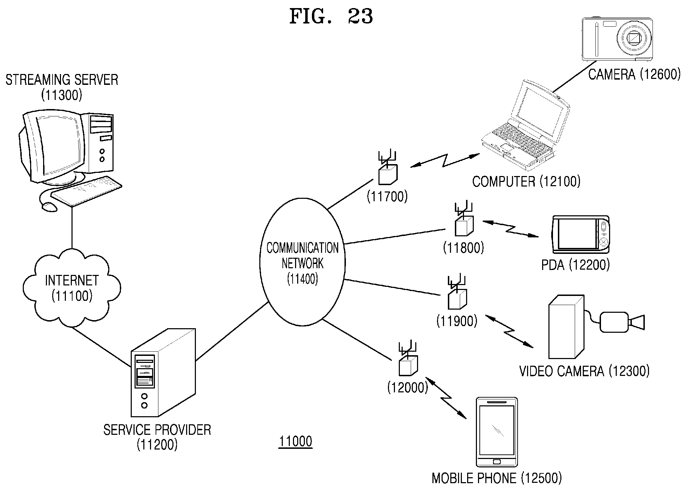

A prediction unit 910 for prediction encoding a coding unit 900 having a depth of 0 and a size of $2N\_0 \times 2N\_0$ may include partitions of a partition mode 912 having a size of $2N\_0 \times 2N\_0$, a partition mode 914 having a size of $2N\_0 \times N\_0$, a partition mode 916 having a size of $N\_0 \times 2N\_0$, and a partition mode 918 having a size of $N\_0 \times N\_0$. FIG. 23 only illustrates the partition modes 912 through 918 which are obtained by symmetrically splitting the prediction unit 910, but a partition mode is not limited thereto, and the partitions of the prediction unit 910 may include asymmetrical partitions, partitions having a predetermined shape, and partitions having a geometrical shape.

Prediction encoding is repeatedly performed on one partition having a size of $2N\_0 \times 2N\_0$, two partitions having a size of $2N\_0 \times N\_0$, two partitions having a size of $N\_0 \times 2N\_0$, and four partitions having a size of $N\_0 \times N\_0$, according to each partition mode. The prediction encoding in an intra mode and an inter mode may be performed on the partitions having the sizes of $2N\_0 \times 2N\_0$, $N\_0 \times 2N\_0$, $2N\_0 \times N\_0$, and $N\_0 \times N\_0$. The prediction encoding in a skip mode is performed only on the partition having the size of $2N\_0 \times 2N\_0$.

If an encoding error is smallest in one of the partition modes 912 through 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of $N\_0 \times N\_0$ to search for a minimum encoding error.

A prediction unit 940 for prediction encoding the coding unit 930 having a depth of 1 and a size of $2N\_1 \times 2N\_1$ (=$N\_0 \times N\_0$) may include partitions of a partition mode 942 having a size of $2N\_1 \times 2N\_1$, a partition mode 944 having a size of $2N\_1 \times N\_1$, a partition mode 946 having a size of $N\_1 \times 2N\_1$, and a partition mode 948 having a size of $N\_1 \times N\_1$.

If an encoding error is the smallest in the partition mode 948, a depth is changed from 1 to 2 to split the partition mode 948 in operation 950, and encoding is repeatedly performed on coding units 960, which have a depth of 2 and a size of $N\_2 \times N\_2$ to search for a minimum encoding error.

When a maximum depth is d, split operation according to each depth may be performed up to when a depth becomes d-1, and splitting information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of $2N\_(d-1) \times 2N\_(d-1)$ may include partitions of a partition mode 992 having a size of $2N\_(d-1) \times 2N\_(d-1)$, a partition mode 994 having a size of $2N\_(d-1) \times N\_(d-1)$, a partition mode 996 having a size of $N\_(d-1) \times 2N\_(d-1)$, and a partition mode 998 having a size of $N\_(d-1) \times N\_(d-1)$.

Prediction encoding may be repeatedly performed on one partition having a size of $2N\_(d-1) \times 2N\_(d-1)$, two partitions having a size of $2N\_(d-1) \times N\_(d-1)$, two partitions having a size of $N\_(d-1) \times 2N\_(d-1)$, four partitions having a size of $N\_(d-1) \times N\_(d-1)$ from among the partition modes 992 through 998 to search for a partition mode having a minimum encoding error.

Even when the partition mode 998 has the minimum encoding error, since a maximum depth is d, a coding unit CU\_(d-1) having a depth of d-1 is no longer split to a lower depth, and a depth for the coding units constituting a current LCU 900 is determined to be d-1 and a partition mode of the current LCU 900 may be determined to be $N\_(d-1) \times N\_(d-1)$. Also, since the maximum depth is d and an SCU 980 having a lowermost depth of d-1 is no longer split to a lower depth, splitting information for the SCU 980 is not set.

A data unit 999 may be a 'minimum unit' for the current LCU. A minimum unit according to one or more embodiments may be a square data unit obtained by splitting an SCU 980 by 4. By performing the encoding repeatedly, the video encoding apparatus 100 may select a depth having the least encoding error by comparing encoding errors according to depths of the coding unit 900 to determine a depth, and set a corresponding partition mode and a prediction mode as an encoding mode of the depth.

As such, the minimum encoding errors according to depths are compared in all of the depths of 1 through d, and a depth having the least encoding error may be determined as a depth. The depth, the partition mode of the prediction unit, and the prediction mode may be encoded and transmitted as information about an encoding mode. Also, since a coding unit is split from a depth of 0 to a depth, only splitting information of the depth is set to 0, and splitting information of depths excluding the depth is set to 1.

The image data and encoding information extractor 220 of the video decoding apparatus 200 may extract and use the information about the depth and the prediction unit of the coding unit 900 to decode the partition 912. The video decoding apparatus 200 may determine a depth, in which splitting information is 0, as a depth by using splitting information according to depths, and use information about an encoding mode of the corresponding depth for decoding.

FIGS. 17 through 19 are diagrams for describing a relationship between coding units 1010, prediction units 1060, and transformation units 1070, according to one or more embodiments.

The coding units 1010 are coding units having a tree structure, corresponding to depths determined by the video encoding apparatus 100, in a LCU. The prediction units 1060 are partitions of prediction units of each of the coding units 1010, and the transformation units 1070 are transformation units of each of the coding units 1010.

When a depth of a LCU is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are obtained by splitting the coding units in the coding units 1010. In other words, partition modes in the coding units 1014, 1022, 1050, and 1054 have a size of $2N \times N$, partition modes in the coding units 1016, 1048, and 1052 have a size of $N \times 2N$, and a partition mode of the coding unit 1032 has a size of $N \times N$. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a LCU to determine an optimum coding unit, and thus coding units having a recursive tree structure may be obtained. Encoding information may include splitting information about a coding unit, information about a partition mode, information about a prediction mode, and information about a size of a transformation unit. Table 1 shows the encoding information that may be set by the video encoding and decoding apparatuses 100 and 200.

Table 1

| Splitting information 0 (Encoding on Coding Unit having Size of $2N \times 2N$ and Current Depth of d) | | | | | Splitting information 1 |
|---|---|---|---|---|---|
| Prediction Mode | Partition mode | | Size of Transformation Unit | | |
| Intra Inter Skip | Symmetrical Partition mode | Asymmetrical Partition mode | Splitting information 0 of Transformation Unit | Splitting information 1 of Transformation Unit | Repeatedly Encode Coding Units having Lower Depth of d+1 |
| (Only $2N \times 2N$) | $2N \times 2N$ $2N \times N$ $N \times 2N$ $N \times N$ | $2N \times nU$ $2N \times nD$ $nL \times 2N$ $nR \times 2N$ | $2N \times 2N$ | $N \times N$ (Symmetrical Type) $N/2 \times N/2$ (Asymmetrical Type) | |

The outputter 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Splitting information indicates whether a current coding unit is split into coding units of a lower depth. If splitting information of a current depth d is 0, a depth, in which a current coding unit is no longer split into a lower depth, is a final depth, and thus information about a partition mode, prediction mode, and a size of a transformation unit may be defined for the final depth. If the current coding unit is further split according to the splitting information, encoding is independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2N×2N.

The information about the partition mode may indicate symmetrical partition modes having sizes of 2N×2N, 2N×N, N×2N, and N×N, which are obtained by symmetrically splitting a height or a width of a prediction unit, and asymmetrical partition modes having sizes of 2N×nU, 2N×nD, nL×2N, and nR×2N, which are obtained by asymmetrically splitting the height or width of the prediction unit. The asymmetrical partition modes having the sizes of 2N×nU and 2N×nD may be respectively obtained by splitting the height of the prediction unit in 1:3 and 3:1, and the asymmetrical partition modes having the sizes of nL×2N and nR×2N may be respectively obtained by splitting the width of the prediction unit in 1:3 and 3:1

The size of the transformation unit may be set to be two types in the intra mode and two types in the inter mode. In other words, if splitting information of the transformation unit is 0, the size of the transformation unit may be 2N×2N, which is the size of the current coding unit. If splitting information of the transformation unit is 1, the transformation units may be obtained by splitting the current coding unit. Also, if a partition mode of the current coding unit having the size of 2N×2N is a symmetrical partition mode, a size of a transformation unit may be N×N, and if the partition mode of the current coding unit is an asymmetrical partition mode, the size of the transformation unit may be N/2×N/2.

The encoding information about coding units having a tree structure may include at least one selected from a coding unit corresponding to a depth, a prediction unit, and a minimum unit. The coding unit corresponding to the depth may include at least one selected from a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a LCU may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

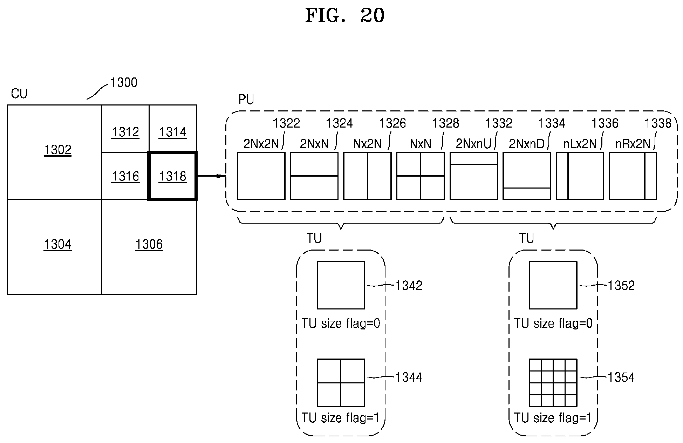

FIG. 20 is a diagram for describing a relationship between a coding unit, a prediction unit, and a transformation unit, according to encoding mode information of Table 1.

A LCU 1300 includes coding units 1302, 1304, 1306, 1312, 1314, 1316, and 1318 of depths. Here, since the coding unit 1318 is a coding unit of a depth, splitting information may be set to 0. Information about a partition mode of the coding unit 1318 having a size of 2N×2N may be set to be one of a partition mode 1322 having a size of 2N×2N, a partition mode 1324 having a size of 2N×N, a partition mode 1326 having a size of N×2N, a partition mode 1328 having a size of N×N, a partition mode 1332 having a size of 2N×nU, a partition mode 1334 having a size of 2N×nD, a partition mode 1336 having a size of nL×2N, and a partition mode 1338 having a size of nR×2N.

Splitting information (TU size flag) of a transformation unit is a type of a transformation index. The size of the transformation unit corresponding to the transformation index may be changed according to a prediction unit type or partition mode of the coding unit.

For example, when the partition mode is set to be symmetrical, i.e. the partition mode 1322, 1324, 1326, or 1328, a transformation unit 1342 having a size of 2N×2N is set if a TU size flag of a transformation unit is 0, and a transformation unit 1344 having a size of N×N is set if a TU size flag is 1.

When the partition mode is set to be asymmetrical, i.e., the partition mode 1332, 1334, 1336, or 1338, a transformation unit 1352 having a size of 2N×2N is set if a TU size flag is 0, and a transformation unit 1354 having a size of N/2×N/2 is set if a TU size flag is 1.

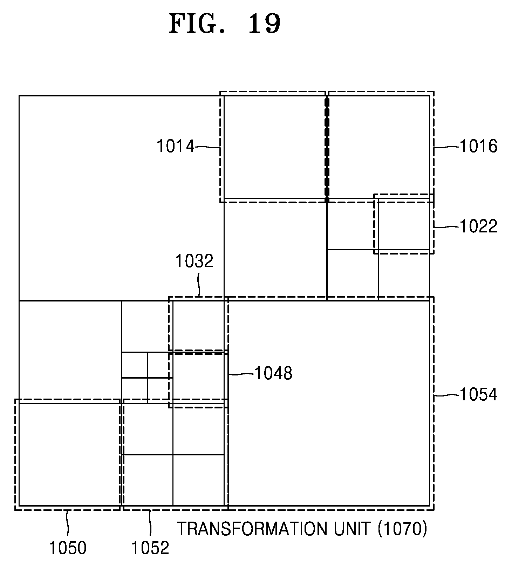

Referring to FIG. 19, the TU size flag is a flag having a value or 0 or 1, but the TU size flag is not limited to 1 bit, and a transformation unit may be hierarchically split having a tree structure while the TU size flag increases from 0. Splitting information (TU size flag) of a transformation unit may be an example of a transformation index.

In this case, the size of a transformation unit that has been actually used may be expressed by using a TU size flag of a transformation unit, according to one or more embodiments, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64×64 and a maximum transformation unit size is 32×32, (a-1) then the size of a transformation unit may be 32×32 when a TU size flag is 0, (a-2) may be 16×16 when the TU size flag is 1, and (a-3) may be 8×8 when the TU size flag is 2.

As another example, (b) if the size of the current coding unit is 32×32 and a minimum transformation unit size is 32×32, (b-1) then the size of the transformation unit may be 32×32 when the TU size flag is 0. Here, the TU size flag cannot be set to a value other than 0, since the size of the transformation unit cannot be less than 32×32.

As another example, (c) if the size of the current coding unit is 64×64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max(\text{MinTransformSize}, \text{RootTuSize}/(2^{\wedge}\text{MaxTransformSizeIndex})) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to one or more embodiments, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \dots\dots\dots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \dots\dots\dots (3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the embodiments are not limited thereto.

According to the video encoding method based on coding units having a tree structure as described with reference to FIGS. 8 through 20, image data of the space domain is encoded for each coding unit of a tree structure. According to the video decoding method based on coding units having a tree structure, decoding is performed for each LCU to reconstruct image data of the space domain. Thus, a picture and a video that is a picture sequence may be reconstructed. The reconstructed video may be reproduced by a reproducing apparatus, stored in a storage medium, or transmitted through a network.

The embodiments may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the video encoding method and/or the video encoding method described above will be referred to as a 'video encoding method according to the various embodiments.' In addition, the video decoding method and/or the video decoding method described above, will be referred to as a 'video decoding method according to the various embodiments.'

A video encoding apparatus including the video encoding apparatus 20, the video encoding apparatus 100, or the image encoder 400, which is described above, will be referred to as a 'video encoding apparatus according to the various embodiments'. In addition, a video decoding apparatus including the video decoding apparatus 25, the video decoding apparatus 200, or the image decoder 500, which is described above, will be referred to as a 'video decoding apparatus according to the various embodiments.'

A computer-readable recording medium storing a program, e.g., a disc 26000, according to various embodiments will now be described in detail.

FIG. 21 is a diagram of a physical structure of the disc 26000 in which a program is stored, according to one or more embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determination method, the video encoding method, and the video decoding method described above may be assigned and stored.

A computer system embodied using a storage medium that stores a program for executing the video encoding method and the video decoding method as described above will now be described with reference to FIG. 29.

FIG. 22 is a diagram of a disc drive 26800 for recording and reading a program by using the disc 26000. A computer system 26700 may store a program that executes at least one selected from a video encoding method and a video decoding method according to one or more embodiments, in the disc 26000 via the disc drive 26800. To run the program stored in the disc 26000 in the computer system 26700, the program may be read from the disc 26000 and be transmitted to the computer system 26700 by using the disc drive 26700.

The program that executes at least one selected from a video encoding method and a video decoding method according to one or more embodiments may be stored not only in the disc 26000 illustrated in FIG. 21 or 22 but also in a memory card, a ROM cassette, or a solid state drive (SSD).

A system to which the video encoding method and a video decoding method described above are applied will be described below.

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 23, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to one or more embodiments.

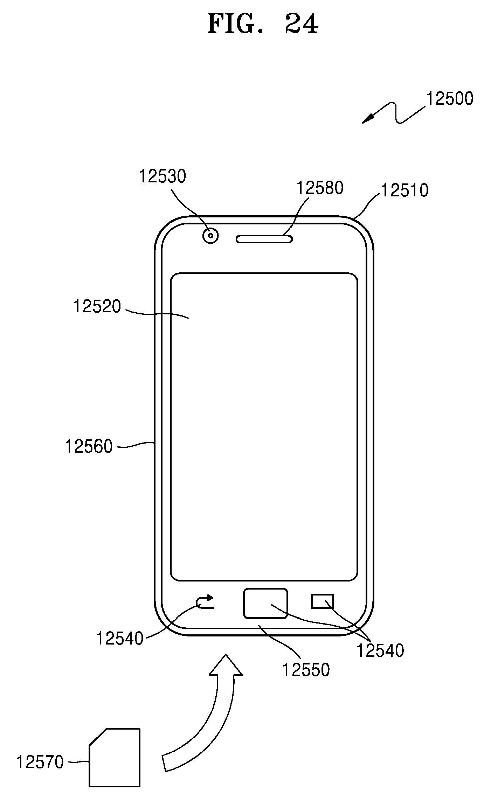

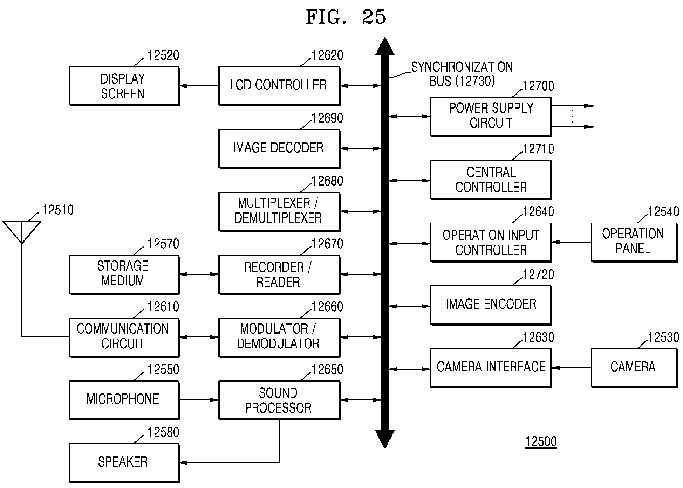

The mobile phone 12500 included in the content supply system 11000 according to one or more embodiments will now be described in greater detail with referring to FIGS. 24 and 25.

FIG. 24 illustrates an external structure of the mobile phone 12500 to which a video encoding method and a video decoding method are applied, according to one or more embodiments. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound outputter, and a microphone 12550 for inputting voice and sound or another type sound inputter. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500, according to one or more embodiments. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recorder/reader 12670, a modulator/demodulator 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulator/demodulator 12660 under control of the central controller 12710, the modulator/demodulator 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulator/demodulator 12660 and the communication circuit 12610, and may be transmitted via the antenna 12510.

When a text message, e.g., email, is transmitted in a data communication mode, text data of the text message is input via the operation panel 12540 and is transmitted to the central controller 12710 via the operation input controller 12640. Under control of the central controller 12710, the text data is transformed into a transmission signal via the modulator/demodulator 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the above-described video encoding method according to the one or more embodiments. The image encoder 12720 may transform the image data received from the camera 12530 into compressed and encoded image data based on the above-described video encoding method according to the one or more embodiments, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulator/demodulator 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulator/demodulator 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulator/demodulator 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulator/demodulator 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoder 12690 may correspond to that of the above-described video decoding method according to the one or more embodiments. The image decoder 12690 may decode the encoded video data to obtain reconstructed video data and provide the reconstructed video data to the display screen 12520 via the LCD controller 12620, by using the above-described video decoding method according to the one or more embodiments.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to one or more embodiments, may be a transceiving terminal including only the video encoding apparatus, or may be a transceiving terminal including only the video decoding apparatus.

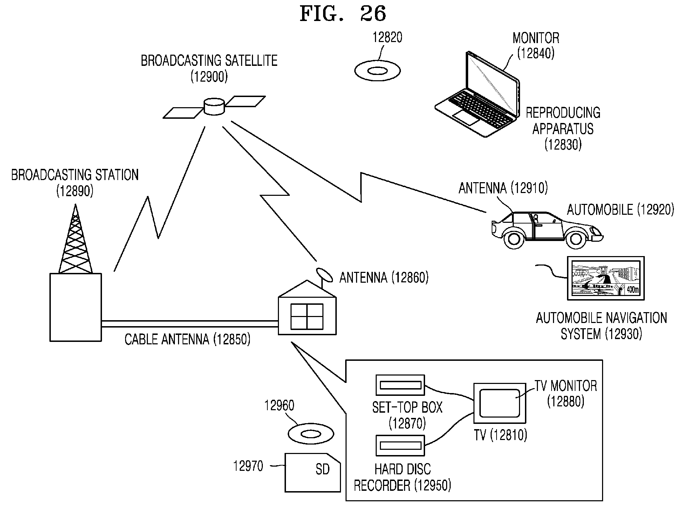

A communication system according to the one or more embodiments is not limited to the communication system described above with reference to FIG. 24. For example, FIG. 26 illustrates a digital broadcasting system employing a communication system, according to one or more embodiments. The digital broadcasting system of FIG. 26 may receive a digital broadcast transmitted via a satellite or a terrestrial network by using a video encoding apparatus and a video decoding apparatus according to one or more embodiments.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to one or more embodiments is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to one or more embodiments may be installed. Data output from the set-top box 12870 may also be reproduced on a TV monitor 12880.

As another example, a video decoding apparatus according to one or more embodiments may be installed in the TV receiver 12810 instead of the set-top box 12870.

An automobile 12920 that has an appropriate antenna 12910 may receive a signal transmitted from the satellite 12900 or the wireless base station 11700 of FIG. 21. A decoded video may be reproduced on a display screen of an automobile navigation system 12930 installed in the automobile 12920.

A video signal may be encoded by a video encoding apparatus according to one or more embodiments and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to one or more embodiments, a video signal recorded on the DVD disc 12960, the SD card 12970, or another storage medium may be reproduced on the TV monitor 12880.

The automobile navigation system 12930 may not include the camera 12530 of FIG. 26, and the camera interface 12630 and the image encoder 12720 of FIG. 26. For example, the computer 12100 and the TV receiver 12810 may not include the camera 12530, the camera interface 12630, and the image encoder 12720.

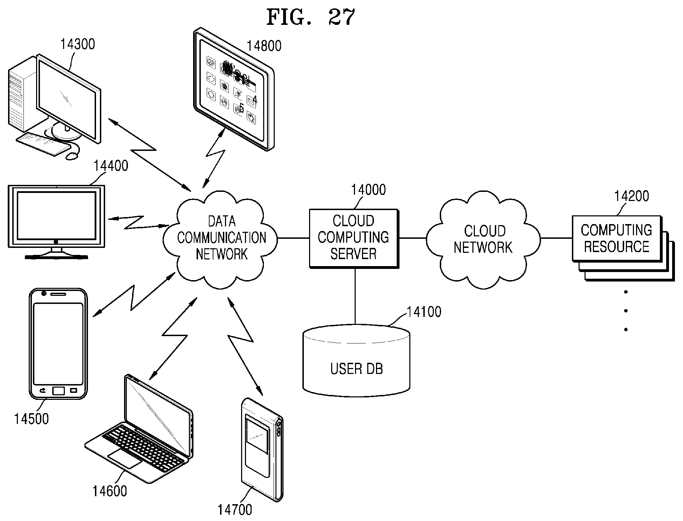

FIG. 27 is a diagram illustrating a network structure of a cloud computing system using a video encoding apparatus and a video decoding apparatus, according to one or more embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the above-described video decoding apparatus. As another example, the user terminal may include the above-described video encoding apparatus. Alternatively, the user terminal may include both the above-described video decoding apparatus and the above-described video encoding apparatus.

Various applications of a video encoding method, a video decoding method, a video encoding apparatus, and a video decoding apparatus according to the one or more embodiments described above have been described above.

However, methods of storing the video encoding method and the video decoding method in a storage medium or methods of implementing the video encoding apparatus and the video decoding apparatus in a device, according to various embodiments, described above are not limited to the embodiments described above.

It should be understood that the embodiments described therein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the spirit and scope of the present invention as defined by the following claims.

**Claims**

1.  A motion vector determining method comprising:

    when a size of a prediction unit belonging to a current layer is larger than a pre-set size, splitting the prediction unit into a plurality of sub-units;
    determining a reference sub-unit belonging to a reference layer used for inter-layer prediction of a current sub-unit that is one of the plurality of sub-units;
    determining a sub-motion vector prediction candidate for inter prediction of the current sub-unit by using a motion vector for inter prediction of the reference sub-unit; and
    determining a motion vector for inter prediction of the current sub-unit by using one of prediction candidates comprising the sub-motion vector prediction candidate.

2.  The motion vector determining method of claim 1, wherein the pre-set size comprises 8x8.

3.  The motion vector determining method of claim 1, wherein the determining of the motion vector comprises determining the motion vector for inter prediction of the reference sub-unit as the motion vector for inter prediction of the current sub-unit.

4.  The motion vector determining method of claim 1, further comprising, when an encoding method of the reference sub-unit is an intra mode, determining the sub-motion vector prediction candidate by using a disparity vector for inter-layer prediction of the current sub-unit.

5.  The motion vector determining method of claim 1, wherein the splitting of the prediction unit comprises:

    signaling the pre-set size; and

    when the size of the prediction unit is larger than the signaled pre-set size, splitting the prediction unit into the plurality of sub-units.

6.  The motion vector determining method of claim 5, further comprising receiving a bitstream,
    wherein the signaling of the pre-set size comprises parsing the pre-set size from the bitstream.

7.  The motion vector determining method of claim 1, wherein the splitting of the prediction unit comprises, when a sum of a width and a height of the prediction unit is larger than 12, splitting the prediction unit into the plurality of sub-units.

8.  The motion vector determining method of claim 1, further comprising performing motion compensation on the current sub-unit by using the determined motion vector.

9.  A motion vector determining apparatus comprising:

    a prediction candidate determiner configured to split a prediction unit belonging to a current layer into a plurality of sub units when a size of the prediction unit is larger than a pre-set size, determine a reference sub-unit belonging to a reference layer used for inter-layer prediction of a current sub-unit that is one of the plurality of sub-units, and determine a sub-motion vector prediction candidate for inter prediction of the current sub-unit by using a motion vector for inter prediction of the reference sub-unit; and
    a motion vector determiner configured to determine a motion vector for inter prediction of the current sub-unit by using one of prediction candidates comprising the sub-motion vector prediction candidate.

**10.** The motion vector determining apparatus of claim 9, wherein the pre-set size comprises 8x8.

**11.** The motion vector determining apparatus of claim 9, wherein the prediction candidate determiner determines the sub-motion vector prediction candidate by using a disparity vector for inter-layer prediction of the current sub-unit when an encoding method of the reference sub-unit is an intra mode.

**12.** The motion vector determining apparatus of claim 9, wherein the prediction candidate determiner splits the prediction unit into the plurality of sub-units when a sum of a width and a height of the prediction unit is larger than 12.

**13.** A non-transitory computer-readable recording medium having recorded thereon a program, which when executed by a computer, performs the method of claim 1.

# FIG. 1A

MOTION VECTOR DETERMINING
APPARATUS (10)

11

PREDICTION
CANDIDATE
DETERMINER

12

MOTION
VECTOR
DETERMINER

# FIG. 1B

START

SPLIT PREDICTION UNIT INTO PLURALITY OF SUB-UNITS WHEN SIZE OF PREDICTION UNIT BELONGING TO CURRENT LAYER IS LARGER THAN PRE-SET SIZE — S11

DETERMINE REFERENCE SUB-UNIT BELONGING TO REFERENCE LAYER USED FOR INTER-LAYER PREDICTION OF CURRENT SUB-UNIT THAT IS ONE OF SUB-UNITS — S12

DETERMINE SUB-MOTION VECTOR PREDICTION CANDIDATE FOR INTER PREDICTION OF CURRENT SUB-UNIT BY USING MOTION VECTOR FOR INTER PREDICTION OF REFERENCE SUB-UNIT — S13

DETERMINE MOTION VECTOR FOR INTER PREDICTION OF CURRENT SUB-UNIT BY USING ONE OF PREDICTION CANDIDATES INCLUDING SUB-MOTION VECTOR PREDICTION CANDIDATE — S14

END

# FIG. 2A

VIDEO ENCODING
APPARATUS (20)

24
FIRST LAYER ENCODER

SECOND LAYER
ENCODER (18)

22
PREDICTOR

10
MOTION
VECTOR
DETERMINING
APPARATUS

21
RESIDUAL
GENERATOR

23
TRANSFORMATION
QUANTIZER

# FIG. 2B

VIDEO DECODING
APPARATUS (25)

29

FIRST LAYER DECODER

SECOND LAYER
DECODER (19)

27

MOTION COMPENSATOR

28

INVERSE
QUANTIZER
INVERSE
TRANSFORMER

10

MOTION
VECTOR
DETERMINING
APPARATUS

26

BLOCK
RECONSTRUCTOR

FIG. 3

# FIG. 4A

REFERENCE SUB-UNIT(46)

FIRST MOTION
VECTOR (47)

REFERENCE
UNIT (45)

REFERENCE
LAYER (41)

DISPARITY VECTOR (49)

CURRENT SUB-UNIT (44)

SECOND MOTION
VECTOR (48)

SUB-UNIT (43)

PREDICTION
UNIT(42)

CURRENT
LAYER (40)

# FIG. 4B

REFERENCE
SUB-UNIT (46)

FIRST PIXEL (57)

SECOND PIXEL (58)

THIRD PIXEL (59)

FOURTH PIXEL (60)

REFERENCE UNIT (45)

# FIG. 5A

SUB-UNIT

SUB-UNIT

FIRST PREDICTION UNIT (51)

# FIG. 5B

SUB-UNIT

SUB-UNIT

SECOND PREDICTION UNIT (52)

# FIG. 5C

SUB-UNIT

THIRD PREDICTION UNIT (53)

# FIG. 5D

SUB-UNIT

FOURTH PREDICTION UNIT (54)

## FIG. 5E

SUB-UNIT

SUB-UNIT

FIFTH PREDICTION UNIT (55)

## FIG. 5F

SUB-UNIT            SUB-UNIT

SIXTH PREDICTION UNIT (56)

## FIG. 6A

| if( layerId !=0 ) { | |
|---|---|
| FIRST SYNTAX ELEMENT (61) — iv_mv_pred_flag[ layerId ] | u(1) |
| SECOND SYNTAX ELEMENT (62) — log2_sub_pb_size_minus3 [ layerId ] | ue(v) |

## FIG. 6B

The variables N is derived as specified in the following:

FIRST SEMANTIC (63){ – If ( nOrigPbW + nOrigPbH ) is equal to 12, the following applies:

N = baseMergeCandList[ MergeIdx[ xOrigP ][ yOrigP ] ]

SECOND SEMANTIC (64){ – Otherwise, ( ( nOrigPbW + nOrigPbH ) is not equal to 12 ), the following applies:

N = extMergeCandList[ MergeIdx[ xOrigP ][ yOrigP ] ]

## FIG. 6C

THIRD SEMANTIC (65) —— nSbW = ( nPbW / SubPbSize[ nuh_layer_id ] <= 1 ) ? nPbW : minSize

FOURTH SEMANTIC (66) —— nSbH = ( nPbH / SubPbSize[ nuh_layer_id ] <= 1 ) ? nPbH : minSize

# FIG. 7A

FIRST REFERENCE
SUB-UNIT (76)

SECOND REFERENCE
SUB-UNIT (79)

Intra

REFERENCE
UNIT (75)

REFERENCE
LAYER (71)

FIRST DISPARITY
VECTOR (77)

SECOND DISPARITY
VECTOR (78)

CURRENT
SUB-UNIT (74)

SUB-UNIT (73)

PREDICTION
UNIT (72)

CURRENT
LAYER (70)

# FIG. 7B

BOUNDARY
LINE (80)

FIRST REFERENCE
SUB-UNIT (14)

SECOND REFERENCE
SUB-UNIT (15)

THIRD REFERENCE
SUB-UNIT (16)

FOURTH REFERENCE
SUB-UNIT (17)

REFERENCE UNIT (75)

# FIG. 8

100

| LCU SPLITTER | → | CODING UNIT DETERMINER | → | OUTPUTTER |
|---|---|---|---|---|

110          120          130

# FIG. 9

200

| RECEIVER | → | IMAGE DATA AND ENCODING INFORMATION EXTRACTOR | → | IMAGE DATA DECODER |
|---|---|---|---|---|

210          220          230

# FIG. 10

64
64
64×64

64
32
64×32

32
64
32×64

32
32
32×32

32
32
32×32

32
16
32×16

16
32
16×32

16
16
16×16

16
16
16×16

16
8
16×8

8
16
8×16

8
8
8×8

8
8
8×8

8
4
8×4

4
8
4×8

4
4
4×4

315

335  325

RESOLUTION : 1920×1080
IMAGE DATA AND ENCODING
INFORMATION EXTRACTOR : 64
MAXIMUM DEPTH = 2

— 310

RESOLUTION : 1920×1080
IMAGE DATA AND ENCODING
INFORMATION EXTRACTOR : 64
MAXIMUM DEPTH = 3

— 320

RESOLUTION : 352×288
IMAGE DATA AND ENCODING
INFORMATION EXTRACTOR : 16
MAXIMUM DEPTH = 1

— 330

FIG. 11

## FIG. 12

BITSTREAM 505 → ENTROPY DECODER 515

RECONSTRUCTED PICTURE BUFFER 530 → INTER PREDICTOR 535

INTRA PREDICTOR 540

OUTPUT VIDEO ← SAO PERFORMER 550 ← DEBLOCKER 545 ← INVERSE TRANSFORMER 525 ← DEQUANTIZER 520

500

# FIG. 13

MAXIMUM HEIGHT AND
MAXIMUM WIDTH OF
CODING UNIT = 64

MAXIMUM
DEPTH = 3

LCU

64 ⌐610
64
64×64

64 ⌐612
32
64×32

32 ⌐614
64
32×64

32 ⌐616
32
32×32

32 ⌐620
32
32×32

32 ⌐622
16
32×16

16 ⌐624
32
16×32

16 ⌐626
16
16×16

16 ⌐630
16
16×16

16 ⌐632
8
16×8

8 ⌐634
16
8×16

8 ⌐636
8
8×8

8 ⌐640
8
8×8

8 ⌐642
4
8×4

4 ⌐644
8
4×8

4 ⌐646
4
4×4

SCU

PREDICTION UNIT
/ PARTITION

DEEPER
CODING UNIT

600

# FIG. 14

CODING UNIT
(710)

64

64×64

TRANSFORMATION UNIT
(720)

32

32

32×32

# FIG. 15

PARTITION TYPE (800)

| 2N ⟋802 | 2N ⟋804 | N ⟋806 | N ⟋808 |
|---|---|---|---|
| 2N □ | N 0 / 1 | 2N 0 \| 1 | N 0 \| 1 / 2 \| 3 |

PREDICTION MODE (810)

| 812 | 814 | 816 |
|---|---|---|
| INTRA MODE | INTER MODE | SKIP MODE |

SIZE OF TRANSFORMATION UNIT (820)

| ⟋822 | ⟋824 | ⟋826 | ⟋828 |
|---|---|---|---|
| | | | INTER |

# FIG. 16

# FIG. 17

| | | |
|---|---|---|
| 1012 | 1014 | 1016 |
| | 1018 | 1020 1022 / 1024 1026 |

CODING UNIT (1010)

# FIG. 18

1014

1016

1022

1032

1048

1054

1050

1052

PREDICTION UNIT (1060)

# FIG. 19

TRANSFORMATION UNIT (1070)

FIG. 20

# FIG. 21

Se

Tr

DISC (26000)

# FIG. 22

26700

26800

26000

FIG. 23

# FIG. 24

12500

12530

12580

12510

12520

12560

12540

12550

12540

12570

FIG. 25

# FIG. 26

BROADCASTING SATELLITE
(12900)

12820

MONITOR
(12840)

REPRODUCING
APPARATUS
(12830)

BROADCASTING STATION
(12890)

ANTENNA (12910)

AUTOMOBILE (12920)

ANTENNA (12860)

AUTOMOBILE NAVIGATION
SYSTEM (12930)

CABLE ANTENNA (12850)

12960

SET-TOP BOX
(12870)

TV MONITOR
(12880)

TV (12810)

12970

SD

HARD DISC
RECORDER (12950)

# FIG. 27

## INTERNATIONAL SEARCH REPORT

International application No.

**PCT/KR2014/006770**

| A. | CLASSIFICATION OF SUBJECT MATTER |
|---|---|

*H04N 19/51(2014.01)i, H04N 19/105(2014.01)i*

According to International Patent Classification (IPC) or to both national classification and IPC

| B. | FIELDS SEARCHED |
|---|---|

Minimum documentation searched (classification system followed by classification symbols)
H04N 19/51; H04N 7/24; H04N 19/137; H04N 13/00; H04N 19/105; H04N 7/36; H04N 19/11

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: unit, split, reference, motion vector, candidate

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2008-0070216 A (SAMSUNG ELECTRONICS CO., LTD.) 30 July 2008<br>See abstract; paragraphs [0044]-[0064] and figures 2-4. | 1-13 |
| A | KR 10-2009-0103663 A (SAMSUNG ELECTRONICS CO., LTD. et al.) 01 October 2009<br>See abstract; paragraphs [0054]-[0058] and figures 1-3. | 1-13 |
| A | KR 10-2013-0079261 A (HUMAX HOLDINGS CO., LTD.) 10 July 2013<br>See abstract; paragraphs [0100]-[0106]; and figure 5. | 1-13 |
| A | KR 10-2012-0135296 A (FUJITSU LIMITED) 12 December 2012<br>See abstract; paragraphs [0046]-[0055]; and figure 5. | 1-13 |
| A | KR 10-2012-0011428 A (SK TELECOM CO., LTD.) 08 February 2012<br>See abstract; paragraphs [0026]-[0040]; and figure 1. | 1-13 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 OCTOBER 2014 (27.10.2014) | **03 NOVEMBER 2014 (03.11.2014)** |

| Name and mailing address of the ISA/**KR**<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br>Telephone No. |
|---|---|

Form PCT/ISA/210 (second sheet) (July 2009)

INTERNATIONAL SEARCH REPORT
Information on patent family members

International application No.

**PCT/KR2014/006770**

| Patent document cited in search report | Publication date | Patent family member | Publication date |
|---|---|---|---|
| KR 10-2008-0070216 A | 30/07/2008 | KR 10-1107254 B1<br>US 2008-0181306 A1 | 20/01/2012<br>31/07/2008 |
| KR 10-2009-0103663 A | 01/10/2009 | EP 2106146 A2<br>EP 2106146 A3<br>JP 2009-246972 A<br>JP 4990927 B2<br>US 2009-0245376 A1<br>US 8553779 B2 | 30/09/2009<br>13/08/2014<br>22/10/2009<br>01/08/2012<br>01/10/2009<br>08/10/2013 |
| KR 10-2013-0079261 A | 10/07/2013 | WO 2013-100635 A1 | 04/07/2013 |
| KR 10-2012-0135296 A | 12/12/2012 | CN 102823247 A<br>JP 5522252 B2<br>KR 10-1380460 B1<br>WO 2011-121731 A1 | 12/12/2012<br>18/06/2014<br>02/04/2014<br>06/10/2011 |
| KR 10-2012-0011428 A | 08/02/2012 | US 2013-0202030 A1<br>WO 2012-015275 A2<br>WO 2012-015275 A3 | 08/08/2013<br>02/02/2012<br>03/05/2012 |

Form PCT/ISA/210 (patent family annex) (July 2009)